(19) Europäisches Patentamt
European Patent Office
Office européen des brevets

(11) EP 4 589 931 A1

(12) EUROPEAN PATENT APPLICATION
published in accordance with Art. 153(4) EPC

(43) Date of publication:
**23.07.2025 Bulletin 2025/30**

(21) Application number: **23877586.0**

(22) Date of filing: **04.10.2023**

(51) International Patent Classification (IPC):
***H04L 69/04*** (2022.01) ***H04W 88/08*** (2009.01)
***H04W 92/02*** (2009.01) ***H04L 27/34*** (2006.01)
***H04W 92/04*** (2009.01) ***H04L 69/22*** (2022.01)

(52) Cooperative Patent Classification (CPC):
**H04L 27/34; H04L 69/04; H04L 69/22; H04W 88/08; H04W 92/02; H04W 92/04**

(86) International application number:
**PCT/KR2023/015269**

(87) International publication number:
**WO 2024/080658 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:
**14.10.2022 KR 20220132783**
**09.11.2022 KR 20220149103**
**25.11.2022 KR 20220160961**

(71) Applicant: **Samsung Electronics Co., Ltd.**
**Suwon-si, Gyeonggi-do 16677 (KR)**

(72) Inventors:
- **LIM, Hyoungjin**
  **Suwon-si Gyeonggi-do 16677 (KR)**
- **SHIM, Seijoon**
  **Suwon-si Gyeonggi-do 16677 (KR)**
- **OH, Jongho**
  **Suwon-si Gyeonggi-do 16677 (KR)**
- **PARK, Junghyun**
  **Suwon-si Gyeonggi-do 16677 (KR)**
- **HWANG, Wonjun**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) ELECTRONIC DEVICE AND METHOD FOR PROVIDING MODULATION COMPRESSION INFORMATION THROUGH USER PLANE MESSAGE ON FRONTHAUL INTERFACE

(57) According to embodiments, a method performed by means of a distributed unit (DU) may comprise the operation of transmitting a control plane (C-plane) message containing control information, and then generating a user plane (U-plane) message, which is composed of modulation compression information and a section and includes modulated and compressed data. The method may comprise the operation of transmitting the U-plane message to a radio unit (RU) through a fronthaul interface. The modulation compression information can include a flag for indicating whether a constellation has shifted, and scale information for indicating a scaler value.

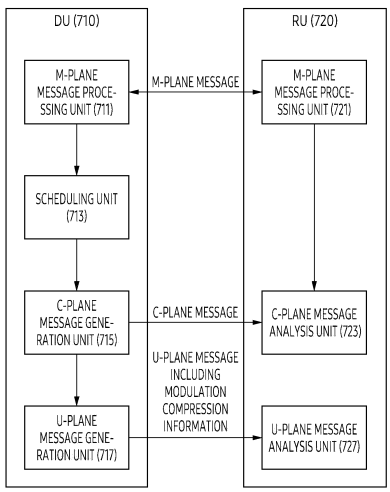


FIG. 7A

EP 4 589 931 A1

## Description

### [Technical Field]

The present disclosure relates to a fronthaul interface. More specifically, the present disclosure relates to an electronic device and a method for providing modulation compression information through a U-plane message in the fronthaul interface.

### [Background Art]

As transmission capacity in wireless communication systems increases, a function split that functionally separates base stations is being applied. According to the function split, the base station may be separated into a distributed unit (DU) and a radio unit (RU). A fronthaul interface is defined for communication between the DU and the RU.

### [Disclosure]

### [Technical Solution]

According to various embodiments, a method performed by a distributed unit (DU) may comprise, after a control plane (C-plane) message including control information is transmitted, generating a user plane (U-plane) message including modulation compression information and modulated and compressed data configured as a section. The method may comprise transmitting, to a radio unit (RU), the U-plane message through a fronthaul interface. The modulation compression information may include a flag for indicating whether constellation is moved, and scale information for indicating a scaler value.

According to various embodiments, a method performed by a radio unit (RU) may comprise after a control plane (C-plane) message including control information is received, receiving a user plane (U-plane) message including modulation compression information and modulated and compressed data configured as a section, through a fronthaul interface. The method may comprise identifying, based on the U-plane message, the modulation compression information and the modulated and compressed data. The modulation compression information may include a flag for indicating whether constellation is moved, and scale information for indicating a scaler value.

According to various embodiments, an electronic device performed by a distributed unit (DU) may comprise at least one transceiver including a fronthaul transceiver, and at least one processor coupled with the at least one transceiver. The at least one processor may be configured to, after a control plane (C-plane) message including control information is transmitted, generate a user plane (U-plane) message including modulation compression information and modulated and compressed data configured as a section. The at least one processor may be configured to transmit, to a radio unit (RU), the U-plane message through a fronthaul interface. The modulation compression information may include a flag for indicating whether constellation is moved, and scale information for indicating a scaler value.

According to various embodiments, an electronic device performed by a radio unit (RU) may comprise at least one transceiver including a fronthaul transceiver, and at least one processor coupled with the at least one transceiver. The at least one processor may be configured to, after a control plane (C-plane) message including control information is received, receive a user plane (U-plane) message including modulation compression information and modulated and compressed data configured as a section through a fronthaul interface. The at least one processor may be configured to identify, based on the U-plane message, the modulation compression information and the modulated and compressed data. The modulation compression information may include a flag for indicating whether constellation is moved, and scale information for indicating a scaler value.

### [Description of the Drawings]

FIG. 1 illustrates a wireless communication system according to embodiments.
FIG. 2A illustrates a fronthaul interface according to embodiments.
FIG. 2B illustrates an open (O)-radio access network (RAN) fronthaul interface according to embodiments.
FIG. 3A illustrates a functional configuration of a distributed unit (DU) according to embodiments.
FIG. 3B illustrates a functional configuration of a radio unit (RU) according to embodiments.
FIG. 4 illustrates an example of a function split between a DU and an RU according to embodiments.
FIGS. 5A to 5B illustrate an example of modulation compression (MC) according to embodiments.
FIG. 6 illustrates an example of a U-plane message according to embodiments.

FIGS. 7A and 7B illustrate an example of an operation of a DU and an RU according to application of modulation compression according to embodiments.

FIG. 8 illustrates an example of a parameter including modulation compression information according to embodiments.

FIG. 9 illustrates an example in which a parameter including modulation compression information is configured for each section, according to embodiments.

FIG. 10 illustrates an example in which a parameter including modulation compression information is configured for each RB, according to embodiments.

FIG. 11 illustrates an example in which a parameter including modulation compression information is configured for each RE, according to embodiments.

FIG. 12 illustrates an example of a parameter including RE masking information according to embodiments.

FIGS. 13A and 13B illustrate an example in which parameters including RE masking information and parameters including modulation compression information are configured as one parameter set in a U-plane message.

FIG. 14 illustrates an example in which parameters including RE masking information and modulation compression information are configured as one parameter set in a U-plane message.

FIG. 15 illustrates an example of a U-plane message including parameters including RE masking information and modulation compression information, according to embodiments.

FIG. 16 illustrates an example of a U-plane message including parameters including RE masking information and modulation compression information, according to embodiments.

FIG. 17 illustrates an example of a U-plane message including a parameter indicating a format for transmitting modulation compression information, according to embodiments.

FIG. 18 illustrates an example of a U-plane message including a parameter indicating a format for transmitting modulation compression information, according to embodiments.

FIG. 19 illustrates an example of a U-plane message including a parameter indicating a method by which RE masking information is configured in a section and a parameter indicating the number of remasks of each PRB, according to embodiments.

FIG. 20 illustrates an example of a U-plane message including a parameter indicating a method by which RE masking information is configured in a section and a parameter indicating the number of remasks of each PRB, according to embodiments.

FIG. 21 illustrates an example of a U-plane message including a parameter indicating a method by which RE masking information is configured in a section and a parameter indicating the number of remasks of each PRB, according to embodiments.

FIG. 22 is a flowchart illustrating an operation of a DU according to embodiments.

FIG. 23 is a flowchart illustrating an operation of an RU according to embodiments.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signal (e.g., packet, message, signal, information, signaling), terms referring to resource (e.g., section, symbol, slot, subframe, radio frame, subcarrier, resource element (RE), resource block (RB), bandwidth part (BWP), occasion), terms referring to operation state (e.g., step, operation, procedure), terms referring to data (e.g., packet, message, user stream, information, bit, symbol, codeword), terms referring to channel, terms referring to network entity (e.g., distributed unit (DU), radio unit (RU), central unit (CU), CU-control plane(CP), CU-user plane(UP), open radio access network (O-RAN) DU (O-DU), O-RAN RU (O-RU), O-RAN CU (O-CU), O-RAN CU-CP (O-CU-UP), O-RAN CU-CP (O-CU-CP)), and terms referring to components of a device, used in the following description are exemplified for convenience of explanation. Therefore, the present disclosure is not limited to terms to be described below, and another term having an equivalent technical meaning may be used. In addition, a term such as '...unit, '...device, '...object, and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

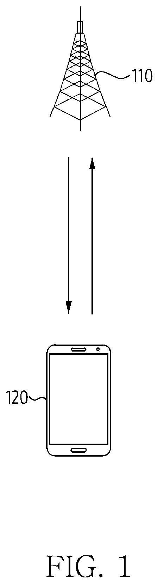

FIG. 1 illustrates a wireless communication system according to embodiments.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information related to the beam. The information related to the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

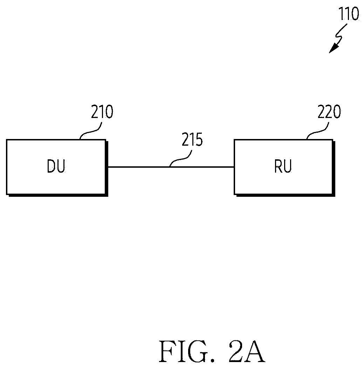

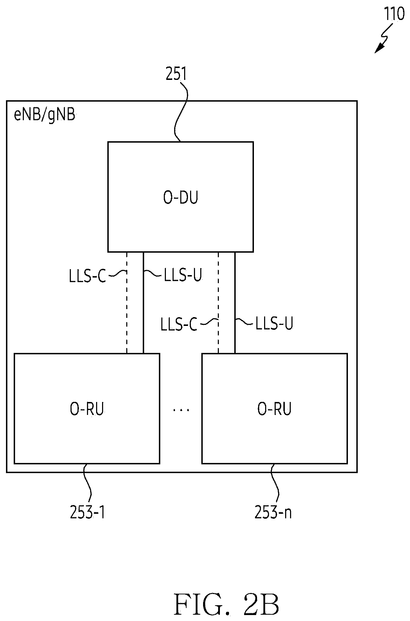

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface according to embodiments. Unlike a backhaul between a base station and a core network, the fronthaul refers to entities between a base station and a radio access network. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

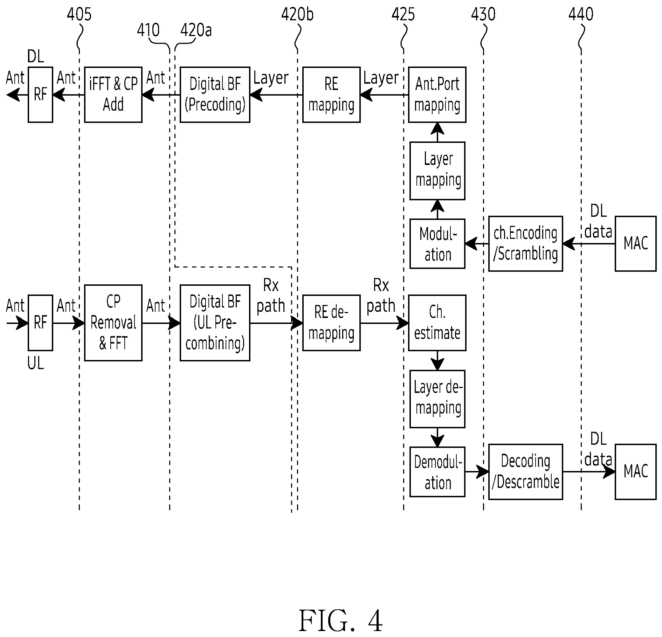

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), CP insertion (CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN) according to embodiments. As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer function split (i.e., intra-PHY-based function split). The LLS-C between the O-DU 251 and the O-RU 253-1 provides a C-plane through the LLS interface. The LLS-U between the O-DU 251 and the O-RU 253-1 provides a U-plane through the LLS interface.

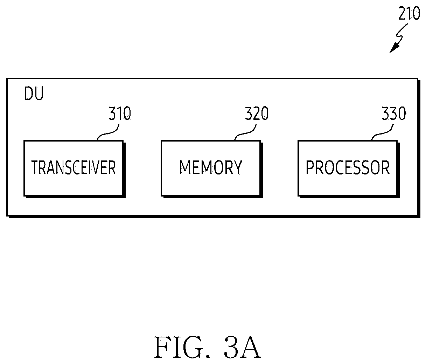

In FIG. 2B, entities of the base station 110 have been described as O-DU and O-RU to describe O-RAN. However, these designations are not to be construed as limiting the embodiments of the present disclosure. In embodiments described with reference to FIGS. 3A to 15, operations of the DU 210 may also be performed by the O-DU 251. A description of the DU 210 may be applied to the O-DU 251. Likewise, in embodiments described with reference to FIGS. 3A to 15, operations of the RU 220 may also be performed by the O-RU 253-1. A description of the RU 220 may be applied to the O-RU 253-1.

FIG. 3A illustrates a functional configuration of a distributed unit (DU) according to embodiments. A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

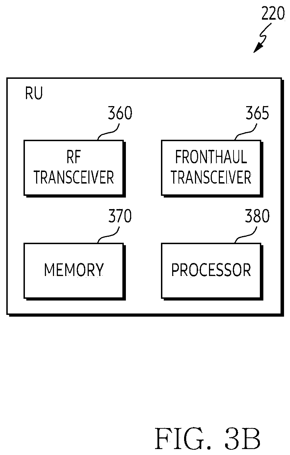

FIG. 3B illustrates a functional configuration of a radio unit (RU) according to embodiments. A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to notify the detection of remote interference. The RF transceiver 460 may transmit a second type of RIM-RS (e.g., RIM-RS type 2 of 3GPP) for notifying the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 320. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce the transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, a first function split in which the RU performs the RF function, and the DU performs the PHY function is substantially such that the PHY function is not implemented within the RU, and, for example, may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, in the present disclosure, unless otherwise specified, the embodiments are described based on a third function split 420a (which may be referred to as category A (CAT-A)) or a fourth function split 420b (which may be referred to as category B (CAT-B)) for performing beamforming processing at the RU. The O-RAN standard distinguishes the type of O-RU according to whether a precoding function is located at the interface of the O-DU or the O-RU interface. An O-RU in which precoding is not performed (i.e., low complexity) may be referred to as a CAT-A O-RU. An O-RU in which precoding is performed may be referred to as a CAT-B O-RU.

Hereinafter, the upper PHY refers to a physical layer processing processed in a DU of a fronthaul interface. For example, the upper PHY may include FEC encoding/decoding, scrambling, modulation/demodulation. Hereinafter, the lower PHY refers to a physical layer processing processed by an RU of a fronthaul interface. For example, the lower PHY may include FFT/iFFT, digital beamforming, and physical random access channel (PRACH) extraction and filtering. However, the above-described criterion does not exclude embodiments through other function splits. A function configuration, signaling, or operation of embodiments described below may be applied not only to the third function split 420a or the fourth function split 420b but also to other function split.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier 'BandSector_ID', a component carrier identifier 'CC_ID', a spatial stream identifier 'RU_Port_ID', and a distributed unit identifier 'DU_Port_ID'. The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes by Section Type are as follows.

1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

In O-RAN, various compression techniques may be used within each section to improve data transmission efficiency between DU and RU. The compression techniques include, for example, a no-compression technique, a block floating point compression (BFPC) technique, and a modulation compression (MC) technique. The IQ data frame of the O-RAN standard may include a user data compression header (e.g., udCompHdr). The user data compression header is defined and transmitted by bit a width (e.g., 4-bit 'udIqWidth') and a compression method (e.g., 4-bit 'udCompMeth'). For example, the compression method may be defined as shown in the following table.

[Table 1]

| udCompMeth | compression method | udIqWidth meaning |
|---|---|---|
| 0000b | no compression | bitwidth of each uncompressed I and Q value |
| 0001b | Block floating point (BFP) | bitwidth of each I and Q mantissa value |
| 0010b | Block scaling | bitwidth of each I and Q scaled value |
| 0011b | $\mu$ -law | bitwidth of each compressed I and Q value |
| 0100b | Modulation compression | bitwidth of each compressed I and Q value |
| 0101b | BFP +selective RE sending | bitwidth of each compressed I and Q value |
| 0110b | Mod-compr + selective RE sending | bitwidth of each compressed I and Q value |
| 0111b-1111b | Reserved for further methods | depends on the specific compression method |

Among the compression techniques described above, the MC technique is a lossless method, which has no data loss and has high compression efficiency. The MC technique relies on a characteristic that a modulated data symbol may be represented by a very limited number of bits of an in-phase (I) component and bits of a quadrature (Q) component. For example, since a quadrature phase shift keying (QPSK) modulated symbol has only two potential states of I and two potential states of Q, the QPSK modulated symbol may be represented with a single bit for the I component and a single bit for the Q component without information loss. For another example, a symbol modulated using 64 QAM may be represented with at most 3 bits for the I component and 3 bits for the Q component.

For the I component of data in the U-plane message, 16 bits may be used. For the Q component of data in the U-plane message, 16 bits may be used. That is, 32 bits may be used for transmitting data in the U-plane message. If QPSK modulation is used for modulation compression, the number of transmitted bits may be reduced from 32 bits to 2 bits. If 16 QAM modulation is used for modulation compression, the number of transmitted bits may be reduced from 32 bits to 4 bits. If 64 QAM modulation is used for modulation compression, the number of transmitted bits may be reduced from 32 bits to 6 bits.

In order to represent values of the I component and the Q component that may allow for overlapping of multiple constellation sizes capable of being represented in a single word-width, constellations may be 'shifted' so that the two's-complement represents each constellation point. For example, QPSK constellations may be shifted by -1/2. The I component may be -1 or 0. The Q component may be -1 or 0. Also, for example, 16 QAM constellations may be shifted by -1/4. The I component may be -1, -1/2, 0, 1/2. The Q component may be -1, 1/2, 0, or 1/2. Also, for example, 64 QAM constellations may be shifted by -1/8. The I component may be -1, -3/4, -1/2, -1/4, 0, 1/4, 1/2, or 3/4. The Q component may be -1, -3/4, -1/2, -1/4, 0, 1/4, 1/2, or 3/4.

The MC technique converts bit-level information into a shifted constellation point (SCP). The DU (e.g., the DU 210) may transmit a U-plane message including the converted information according to the SCP to the RU (e.g., the RU 220). The DU 210 may transmit, to the RU 220, a constellation shift flag (csf) to indicate whether to shift. For example, in case that a value of 'csf' is '1', a shift value of each constellation point in a specific bit width may be defined as in Table 2.

[Table 2]

| udIqWidth | Shift value |
|---|---|
| 1 | 1/2 |
| 2 | 1/4 |
| 3 | 1/8 |
| 4 | 1/16 |
| 5 | 1/32 |

Compressed data according to the MC technique does not represent an actual power value. In order for the RU to set a power level in modulated and compressed data, the DU 210 may transmit modulation compression scaler value (modCompScaler) to the RU 220. A 'modCompScaler' parameter indicates a scale factor to be applied to an unshifted constellation point during decompression. In the O-RAN standard, the 'modCompScaler' parameter may be provided to the RU through section extension information (e.g. Section Extension Type 4). The 'modCompScaler' parameter may indicate an exponent component and a mantissa component through the following equation.

[Equation 1]

$$"mantissa" = \sum_{k=0}^{10} modCompScaler[k] \cdot 2^{k-11}$$

$$"exponent" = \sum_{k=11}^{14} modCompScaler[k] \cdot 2^{k-11}$$

The 'mantissa' indicates a mantissa component of an indicated value. The 'exponent' indicates an exponent component of the indicated value. The modCompScaler[k] indicates a k+1th bit of a 'modCompScaler' parameter. For example, modCompScaler[0] indicates a first bit of the 'modCompScaler' parameter. modCompScaler[14] indicates a 15th bit of the 'modCompScaler' parameter.

The most significant 4 bits of the 15 bits of the 'modCompScaler' parameter indicate the exponent component, and the least significant 11 bits of the 15 bits of the 'modCompScaler' parameter indicate the mantissa component. Therefore, the value indicated by the 'modCompScaler' parameter is as shown in the following Equation.

[Equation 2]

$$modCompScaler = mantissa \cdot 2^{-exponent}$$

The 'mantissa' indicates a mantissa component of an indicated value. The 'exponent' represents an exponent component of the indicated value.

The Section Extension 4 of the O-RAN standard, which passes the 'modCompScaler' parameter, is as shown in the following table.

[Table 3]

| | | | |
|---|---|---|---|
| ef | extType = 0x04 | 1 | Octet N |
| extLen = 0x01 (1 word) | | 1 | N+1 |
| csf | modCompScaler[14:8] | 1 | N+2 |
| modCompScaler[7:0] | | 1 | N+3 |

The DU 210 may pass modulation compression power scale RE mask (mcScaleReMask) to the RU 220. The 'mcScaleReMask' parameter may indicate a position of RE, together with the identical scaling and modulation type within PRB. Similar to the 'modCompScaler' parameter, the DU 210 may pass a scaling value for modulation compression (mcScaleOffset) to the RU 220.

The 'mcScaleOffset' parameter indicates a scale factor to be applied to an unshifted constellation point during decompression. In the O-RAN standard, the 'mcScaleOffset' parameter may be provided to the RU 220 through section extension information (e.g. Section Extension Type 4). The 'mcScaleOffset' parameter may indicate an exponent component and a mantissa component through the following Equation.

[Equation 3]

$$"mantissa" = \sum_{k=0}^{10} mcScaleOffset[k] \cdot 2^{k-11}$$

$$"exponent" = \sum_{k=11}^{14} mcScaleOffset[k] \cdot 2^{k-11}$$

The 'mantissa' indicates a mantissa component of an indicated value. The 'exponent' indicates an exponent component of the indicated value. The mcScaleOffset[k] indicates a k+1th bit of the 'mcScaleOffset' parameter. For example, mcScaleOffset[0] indicates a first bit of the 'mcScaleOffset' parameter. mcScaleOffset[14] indicates a 15th bit of the 'mcScaleOffset' parameter.

The most significant 4 bits of the 15 bits of the 'mcScaleOffset' parameter indicate the exponent component, and the least significant 11 bits of the 15 bits of the 'mcScaleOffset' parameter indicate the mantissa component. Therefore, the value indicated by the 'mcScaleOffset' parameter is as shown in the following Equation.

[Equation 4]

$$mcScaleOffset = mantissa \cdot 2^{-exponent}$$

The 'mantissa' indicates a mantissa component of an indicated value. The 'exponent' indicates an exponent component of the indicated value.

Section Extension 5 of the O-RAN standard passing the 'mcScaleOffset' parameter is as shown in the following tables. Table 4 indicates one scaler value, and Table 5 indicates two scaler values.

[Table 4]

<table>
<tr><td>ef</td><td colspan="2">extType = 0x05</td><td>1</td><td>Octet N</td></tr>
<tr><td colspan="3">extLen = 0x2 (2 words)</td><td>1</td><td>N+1</td></tr>
<tr><td colspan="3">mcScaleReMask[11:4]</td><td>1</td><td>N+2</td></tr>
<tr><td>mcScaleReMask [3:0]</td><td>csf</td><td>mcScaleOffset [14:12]</td><td>1</td><td>N+3</td></tr>
<tr><td colspan="3">mcScaleOffset [11:4]</td><td>1</td><td>N+4</td></tr>
<tr><td>mcScaleOffset [3:0]</td><td colspan="2">zero padding</td><td>1</td><td>N+5</td></tr>
<tr><td colspan="3">zero padding</td><td>1</td><td>N+6</td></tr>
<tr><td colspan="3">zero padding</td><td>1</td><td>N+7</td></tr>
</table>

[Table 5]

<table>
<tr><td>ef</td><td colspan="2">extType = 0x05</td><td>1</td><td>Octet N</td></tr>
<tr><td colspan="3">extLen = 0x03 (3 words)</td><td>1</td><td>N+1</td></tr>
<tr><td colspan="3">mcScaleReMask[11:4]</td><td>1</td><td>N+2</td></tr>
<tr><td>mcScaleReMask [3:0]</td><td>csf</td><td>mcScaleOffset [14:12]</td><td>1</td><td>N+3</td></tr>
<tr><td colspan="3">mcScaleOffset [11:4]</td><td>1</td><td>N+4</td></tr>
<tr><td>mcScaleOffset [3:0]</td><td colspan="2">mcScaleReMask[11:8]</td><td>1</td><td>N+5</td></tr>
<tr><td colspan="3">mcScaleReMask[7:0]</td><td>1</td><td>N+6</td></tr>
<tr><td>csf</td><td colspan="2">mcScaleOffset [14:8]</td><td>1</td><td>N+7</td></tr>
<tr><td colspan="3">mcScaleOffset [7:0]</td><td>1</td><td>N+8</td></tr>
<tr><td colspan="3">zero padding</td><td>1</td><td>N+9</td></tr>
<tr><td colspan="3">zero padding</td><td>1</td><td>N+10</td></tr>
<tr><td colspan="3">zero padding</td><td>1</td><td>N+11</td></tr>
</table>

The section extension information of Tables 3 to 5 described above may be included in the C-plane message. The RU 220 may restore the original signal intended by the DU 210, based on the compressed data received through the U-plane message and the parameters received through the C-plane message. According to an embodiment, the RU 220 may obtain the original signal from the compressed bits, based on the 'csf' parameter. According to an embodiment, the RU 220 may obtain the original signal from the compressed bits, based on the 'modCompScaler' parameter. According to an embodiment, the RU 220 may obtain the original signal from the compressed bits, based on the 'mcscaleoffset' parameter and the 'mcScaleReMask' parameter.

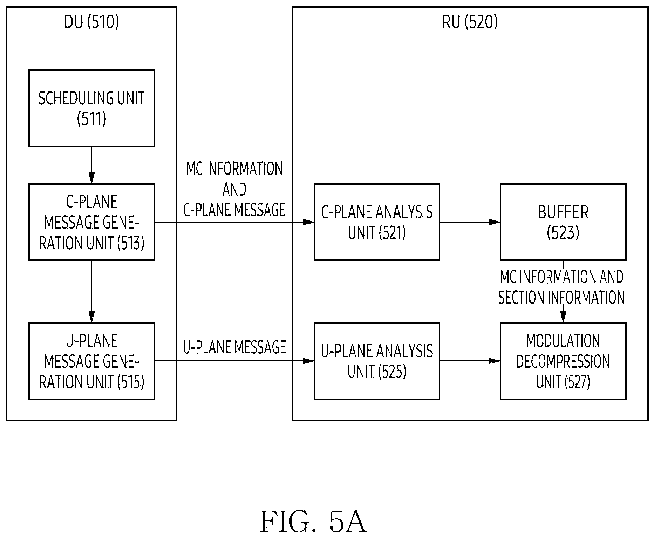

FIGS. 5A to 5B illustrate an example of modulation compression (MC) according to embodiments. The terms '...unit', '...er', and the like used below may mean a unit processing at least one function or operation, which may be implemented by hardware, software, or a combination of hardware and software.

Referring to FIG. 5A, DU 510 may include a scheduling unit 511, a C-plane message generation unit 513, and a U-plane message generation unit 515. The scheduling unit 511 may perform scheduling for U-plane messages according to the above-described modulation compression technique. The C-plane message generation unit 513 may generate a C-plane message including control information according to the above-described modulation compression technique. For example, the C-plane message generation unit 513 may generate a C-plane message including Section Extension 4 as in Table 3. In addition, for example, the C-plane message generation unit 513 may generate a C-plane message including Section Extension 5 as in Table 4 or Table 5. The U-plane message generation unit 515 may generate a U-plane message including the I component and the Q component according to the above modulation compression technique.

The RU 520 may include a C-plane analysis unit 521, a buffer 523, a U-plane analysis unit 525, and a modulation decompression unit 527. The C-plane analysis unit 521 may receive a C-plane message from the DU 510. The C-plane analysis unit 521 may obtain a parameter(s) related to modulation compression from section extension information (e.g., Section Extension 4, Section Extension 5) included in the C-plane message. The C-plane analysis unit 521 may obtain section information from the C-plane message. The C-plane analysis unit 521 may store the parameter(s) related to the modulation compression and the section information in the buffer 523. The U-plane analysis unit 525 may receive the U-plane message from the DU 510. The U-plane analysis unit 525 may include the I component and the Q component included in the U-plane message. The modulation decompression unit 527 may obtain, from the buffer 523, the parameter(s) related to the modulation compression and the section information. The modulation decompression unit 527 may obtain the I component and the Q component from the U-plane analysis unit 525. The modulation decompression unit 527 may obtain a bit string for the I component and a bit string for the Q component, based on the parameters related to the modulation compression. For example, when decompressing, the modulation decompression unit 527 may 'unshift' a constellation according to a 'csf' value and apply a scale factor for a constellation type displayed in a section. The section has several modulation types. The modulation type may be inferred from remask bits. Each '1' bit in remask bits indicates a shift command ('csf) and a scale factor (e.g., 'modCompScaler' when using section extension 4, 'mcScaleOffset' when using section extension 5) for REs of PRB.

The O-RAN standard provides section-based modulation compression. If a compression technique other than modulation compression is used when transmitting data of a specific slot, a section may be configured based on beamId (or ueId) allocation of data resources (e.g. RE/PRB/symbol). However, applying modulation compression may require that all PRBs and symbols in the section use the same 'csf' and the same scaler value (e.g. 'modCompScaler' when using Section Extension 4, 'mcScaleOffset' when using Section Extension 5). In other words, since the section is configured based on the 'csf' and the scaler value of the data, relatively more sections may be configured in modulation compression compared to compression techniques other than modulation compression. For example, if resource areas have the same beamId but have different 'csf' and different scaler value, the resource areas may be required to be separated into different sections.

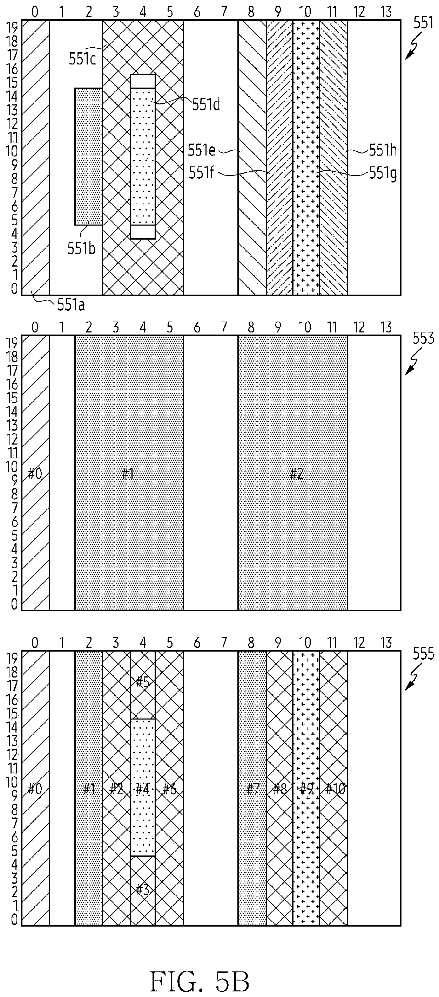

Referring to FIG. 5B, a resource grid 551 indicates data allocation by independent data type. A vertical axis of the resource grid 551 may indicate a frequency domain (unit: PRB), and a horizontal axis may indicate a time domain (unit: symbol). For example, data 551a, data 551b, data 551c, data 551d, data 551e, data 551f, data 551g, and data 551h may be included in an area of the resource grid 551.

A resource grid 553 indicates data allocation that does not use modulation compression. Data (e.g., data by beamID (or euId)) transmitted individually through the DU 510 may have a unique modulation type. However, if the modulation compression technique is not applied, the DU 510 defines a certain area specified as a PRB section and a symbol section as a section, and the DU 510 may transmit data on the section to the RU 520. For example, three sections (e.g., section #0, section #1, and section #2) may be included in the resource grid 553. The section #1 may include a resource area of the data 551b, a resource area of the data 551c, and a resource area of the data 551d. The section #2 may include a resource area of the data 551e, a resource area of the data 551f, a resource area of data 551g, and a resource area of the data 551h.

A resource grid 555 indicates data allocation using modulation compression. A unique modulation type may be applied to each individual data. For example, the data 551c and the data 551d are frequency-divided in a specific symbol (e.g., symbol #4). That is, the data 551c and the data 551d may be divided into different RB areas within the same symbol. If the same modulation compression is applied to each section, the data 551c and the data 551d are required to be allocated to different sections. That is, unlike the resource grid 553, the data 551d may be required to be included in a section different from a section in which the data 551c is included. In addition, since the modulation type may be distinguished for each symbol for modulation compression, the section may be time-divided. For example, independent modulation compression may be applied to each of the data 551e, the data 551f, the data 551g, and the data 551h. If the same modulation compression is applied to each section, the data 551e, the data 551f, the data 551g, and the data 551h are required to be allocated to different sections.

Although not illustrated in FIG. 5B, in addition to separation by RB units, separation by REs may also occur when modulation compression is performed using Section extension 4.

As described through FIG. 5B, data transmission using modulation compression may require more sections compared to data transmission without using modulation compression. However, as the separation of sections increases, the amount of fronthaul transmission may increase. Since the overhead for defining the section increases and parameter(s) other than modulation compression are repeatedly transmitted, inefficiency in the RU may occur.

In order to reduce the above-described problem, according to embodiments of the present disclosure, modulation compression information (e.g., 'csf' and scaler value) for data allocated within some areas of the section may be provided through a U-plane message. Several areas may be configured within one section, and modulation compression information may be allocated for each area. The DU (e.g., the DU 510) may transmit, to the RU (e.g., the RU 520), a U-plane message for the section, including modulation compression information for each area. In order to illustrate embodiments of the present disclosure, the area distinguished for modulation compression within the one section is referred to as a modulation compression (MC) chunk, it may be replaced with terms such as data chunk, subblock, data subblock, MC subblock, section subblock, MC area, section subarea, section partial area, or terms having equivalent technical meaning.

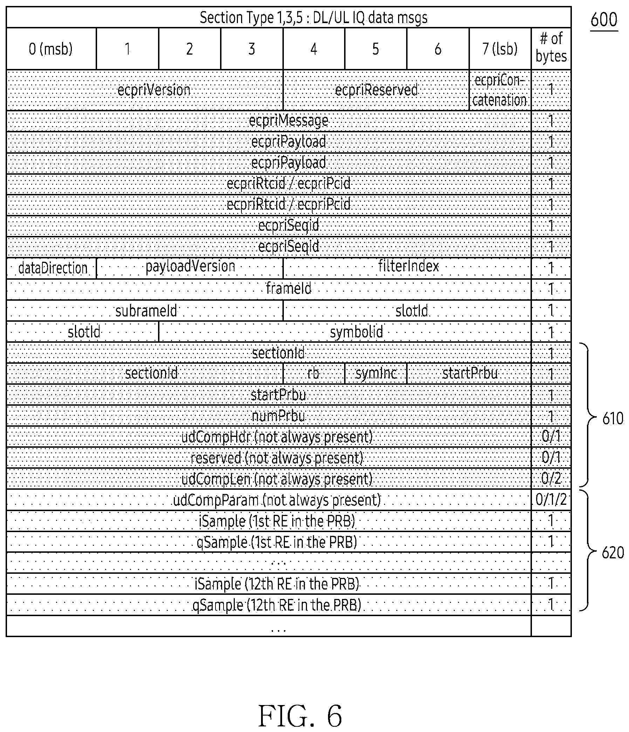

FIG. 6 illustrates an example of a U-plane message according to embodiments. The RU may load IQ sample data of data sections into one U-plane packet, through a C-plane message including section extension information for providing U-plane merging. For example, each section type of the data sections may be 1, 3, or 5.

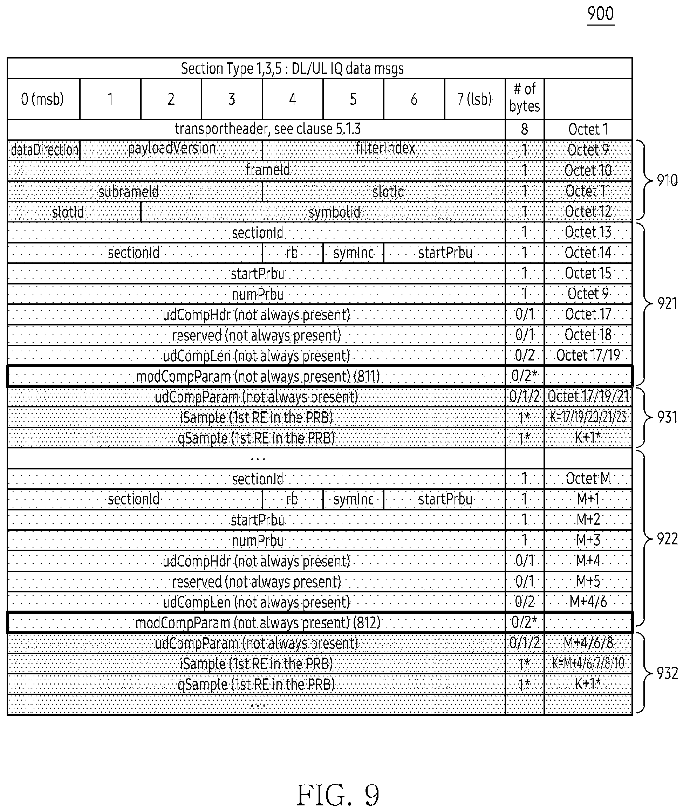

Referring to FIG. 6, a U-plane message 600 according to the U-plane merging may include a transmission header, an application layer header, section header information 610, and individual PRB information 620. A description of the transmission header and a description of the application layer header may be referred to in FIG. 9.

The section header information 610 may include 'sectionId' which means a section identifier, 'rb' which indicates whether every RB is used or every other RB is used, 'symInc' which means a symbol number increment command, 'startPrbu' which indicates a start PRB number of a U-plane section, and 'numPrbu' which indicates the number of consecutive PRBs per data section. Values of parameters (e.g. rb, startPrbu and numPrbu) of the section header information 610 ensure that data sections are never overlapped. For a description of one section within a C-plane message, a plurality of U-plane data sections related to the section are required to define the PRB to which the included IQ data may be applied. In general, a data section in a U-plane may include PRBs corresponding to section descriptions of a C-plane message.

The section header information 610 may include 'udCompHdr' indicating a compression method for user data of a data section and IQ bit width. The compression method may be no compression, block floating point (BFP), block scaling, μ-law, modulation compression, 'BFP and selective RE sending', or 'modulation compression and selective RE sending'. The section header information 610 may include 'udCompLen' specifying the total number of octets including padding within PRB fields, up to the end of the current section. The compression method may be set by the M-plane or specified in the 'udCompHdr' of the data section including the PRB. The section header information 610 may include a 'reserved' field, which are bits reserved for further use.

The individual PRB information 620 may include a 'udCompParam' field to indicate parameters applied to the compression method used for the PRB. The individual PRB information 620 may include an in-phase sample (iSample) and a quadrature sample (qSample) for each RE of the PRB. According to an embodiment, one section may be configured with at least one PRB. The U-plane message 600 may include individual PRB information for each of at least one PRB. For example, the individual PRB information 620 may include PRB information for a first PRB configuring one section. Although not illustrated, PRB information for a second PRB configuring one section may be configured to follow the individual PRB information 620.

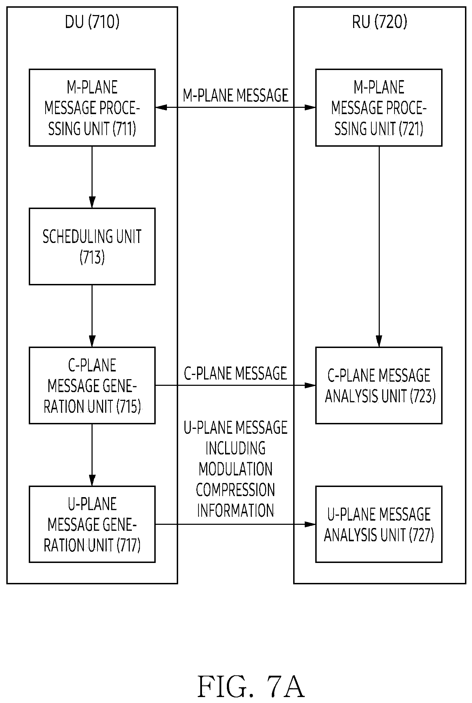

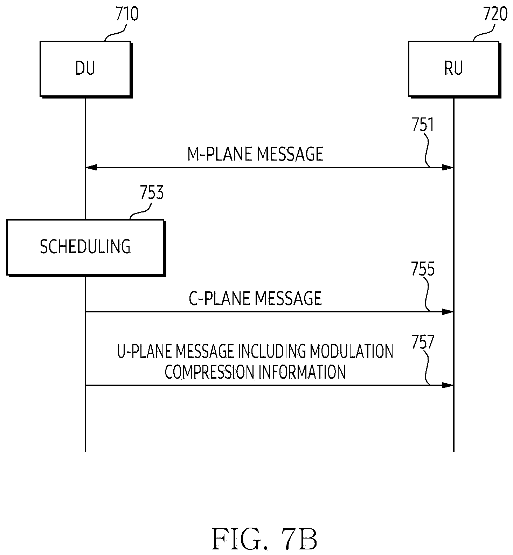

FIGS. 7A and 7B illustrate an example of an operation of a DU and an RU according to application of modulation compression according to embodiments. Unlike the above-described embodiments, an embodiment for supporting information transmission for MC processing that saves RU resources and prevents section separation may be described below. In FIG. 5A, the RU 520 should include separate memory (e.g., the buffer 523) for modulation decompression, and require a matching process between compressed data and modulation compression information and a device for the matching process. Therefore, the usage of resources may increase. In FIGS. 7A and 7B, an embodiment for transmitting modulation compression information by adding it to a U-plane message (or U-plane packet) of the corresponding section to reduce resource usage and prevent section separation as much as possible may be described.

Referring to FIG. 7A, DU 710 may include an M-plane message processing unit 711, a scheduling unit 713, a C-plane message generation unit 715, and a U-plane message generation unit 717.

According to an embodiment, the M-plane message processing unit 711 may generate an M-plane message including information on whether to support a format of the U-plane message. For example, the M-plane message processing unit 711 may generate an M-plane message including information indicating that a U-plane message to be transmitted includes modulation compression information. For example, the DU 710 may determine (or identify) a compression technique of data to be transmitted via the U-plane message. The DU 710 may generate an M-plane message including information indicating that the U-plane message to be transmitted includes modulation compression information, by using the M-plane message processing unit 711. The M-plane message processing unit 711 may receive the M-plane message from the RU 720. The DU 710 may perform a negotiation protocol by exchanging management information with the RU 720 using an M-plane message processing unit 721.

The scheduling unit 713 may perform scheduling for U-plane messages according to the above-described modulation compression technique.

The C-plane message generation unit 715 may generate a C-plane message including control information. For example, the C-plane message may not include Section Extension 4 such as Table 3. For example, the C-plane message may not include modulation compression information.

The U-plane message generation unit 717 may generate a U-plane message including an I component and a Q component according to the modulation compression technique. For example, the U-plane message may include not only the I component and the Q component according to the modulation compression technique, but also modulation compression information according to the modulation compression technique.

The RU 720 may include an M-plane message processing unit 721, a C-plane message analysis unit 723, and a U-plane message analysis unit 725.

The M-plane message processing unit 721 may receive the M-plane message from the DU 710. For example, the M-plane message processing unit 721 may obtain information on whether to support a format of the U-plane message included in the M-plane message. For example, the M-plane message processing unit 721 may obtain information indicating that a U-plane message to be received includes modulation compression information. The M-plane message processing unit 721 may generate an M-plane message. The M-plane message processing unit 721 may transmit the generated M-plane message to the DU 710. The RU 720 may perform a negotiation protocol by exchanging management information with the DU 710 using the M-plane message processing unit 721.

The C-plane message analysis unit 723 may receive the C-plane message from the DU 710. The C-plane message analysis unit 723 may obtain section information from the C-plane message.

The U-plane message analysis unit 725 may receive the U-plane message from the DU 710. The U-plane message analysis unit 725 may obtain the I component and the Q component included in the U-plane message. The U-plane message analysis unit 725 may obtain modulation compression information included in the U-plane message. For example, the modulation compression information may include parameters related to modulation compression.

According to an embodiment, the U-plane message analysis unit 725 may perform all or some of functions of the modulation decompression unit 527 of FIG. 5. The U-plane message analysis unit 725 may obtain a bit string for the I component and a bit string for the Q component based on parameters related to the modulation compression. For example, when decompressing, the U-plane message analysis unit 725 may "unshift" a constellation according to a value of "csf" and apply a scale factor for a constellation type displayed in the section.

Referring to FIG. 7B, in operation 751, the DU 710 may exchange an M-plane message with the RU 720. The DU 710 may determine a compression technique of data to be transmitted through the U-plane message. For example, the DU 710 may generate an M-plane message including information indicating that the U-plane message to be transmitted includes modulation compression information, and transmit the generated M-plane message to the RU 720.

In operation 753, the DU 710 may perform scheduling. For example, the DU 710 may perform scheduling of data to be transmitted to the RU 720. The DU 710 may obtain scheduling information.

In operation 755, the DU 710 may transmit a C-plane message to the RU 720, based on the scheduling information. For example, the DU 710 may generate a C-plane message, based on the scheduling information. The C-plane message may be configured with at least one C-plane message. Unlike FIG. 5, the C-plane message may not include modulation compression information.

According to an embodiment, the DU 710 may transmit a C-plane message to the RU 720 through a first slot. The RU 720 may receive a C-plane message from the DU 710 through the first slot. The RU 720 may parse the C-plane message. The RU 720 may obtain information (e.g., control information) included in the C-plane message, based on parsing the C-plane message.

In operation 757, the DU 710 may transmit an U-plane message to the RU 720. For example, the DU 710 may generate an U-plane message including an I component and a Q component according to the modulation compression technique. For example, the U-plane message may include the I component and the Q component according to the modulation compression technique, as well as modulation compression information according to the modulation compression technique. The DU 710 may transmit, to the RU 720, a U-plane message including the I component and the Q component according to the modulation compression technique and the modulation compression information according to the modulation compression technique.

According to an embodiment, the DU 710 may transmit the C-plane message to the RU 720 and then transmit the U-plane message to the RU 720 through a second slot. For example, the second slot may be a slot set after the first slot. For example, the U-plane message may include modulation compression information corresponding to each section. The RU 720 may receive the U-plane message through the second slot. The RU 720 may parse the U-plane message. The RU 720 may obtain compressed data and modulation compression information, based on parsing the U-plane message. The RU 720 may restore the compressed data, based on the compressed data and the modulation compression information.

For example, in case that the modulation compression information is included in the U-plane message, fewer sections may be configured than in case that the modulation compression information is included in the C-plane message. In addition, a matching process between separate memory (or buffer) and compressed data and modulation compression information may be omitted. Accordingly, a resource of the RU 720 may be saved.

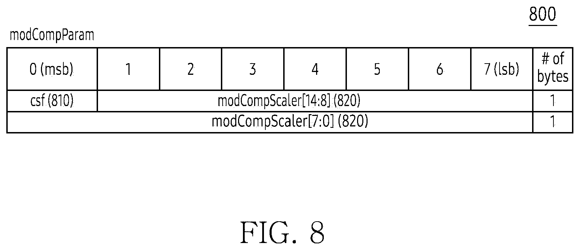

FIG. 8 illustrates an example of a parameter including modulation compression information according to embodiments.

FIG. 9 illustrates an example in which a parameter including modulation compression information is configured for each section, according to embodiments.

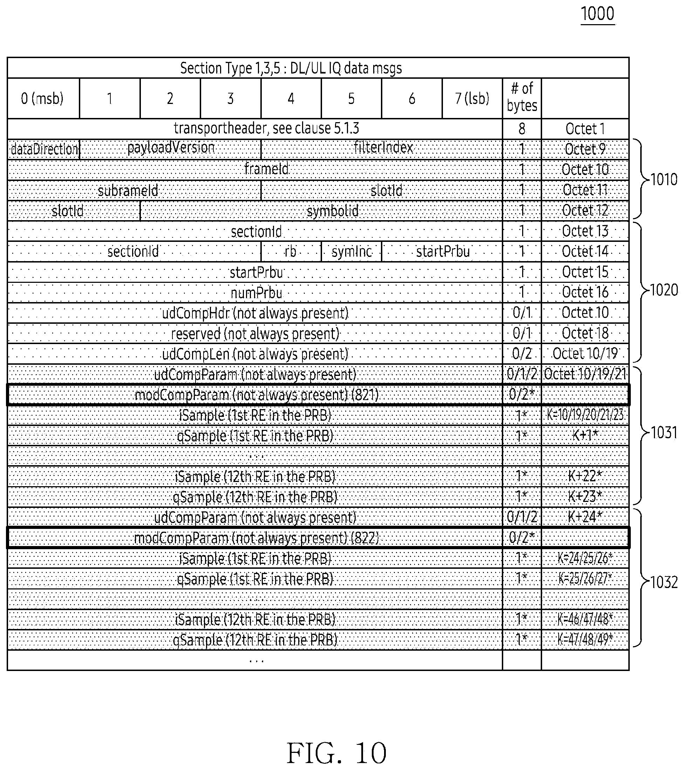

FIG. 10 illustrates an example in which a parameter including modulation compression information is configured for each RB, according to embodiments.

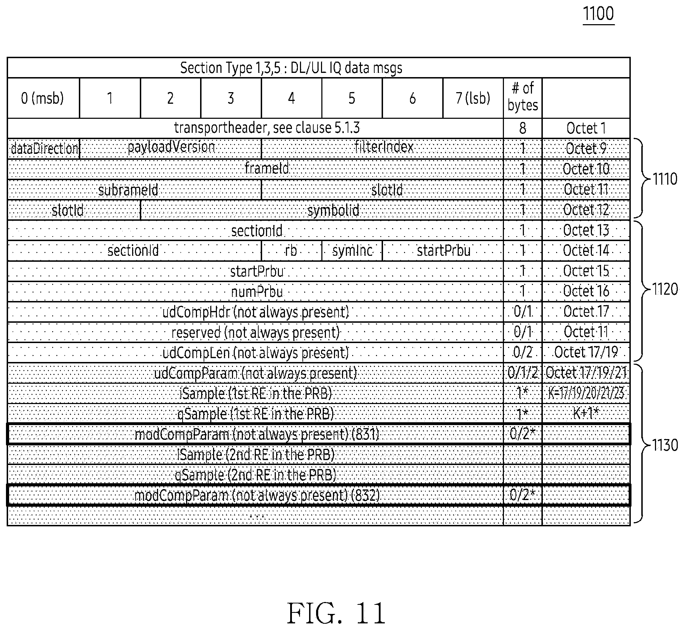

FIG. 11 illustrates an example in which a parameter including modulation compression information is configured for each RE, according to embodiments.

Referring to FIG. 8, modCompParam 800 may be configured in a U-plane message. The modCompParam 800 may include modulation compression information. For example, the modCompParam 800 may be configured for each section of the U-plane (or U-plane message). For example, the modCompParam 800 may be configured for each RE within the section. For example, the modCompParam 800 may be configured for each RB (or PRB) within the section.

According to an embodiment, the modCompParam 800 may include a set of csf 810 and modCompScaler 820. The csf 810 may configured with 1 bit. The modCompScaler 820 may be configured with 15 bits. For example, the csf 810 may mean a parameter used to indicate whether data converted to a shifted constellation point (SCP) is shifted in a section or a portion of the section. For example, the modCompScaler 820 may mean a parameter indicating a modulation compression scale value (or scaler value) so that the RU 720 may set a power level to modulated and compressed data.

Referring to FIGS. 9 to 11, an U-plane message 900, 1000, or 1100 may be configured with a transport layer and an application layer.

The application layer may have to be within the transport payload. The application layer may be configured with a common header for time reference. It may be followed by information and parameters, which are dependent on and specific to a type of section in use. Data from several sections of the same value may be ordered sequentially within the payload.

In order to minimize packet rate through an interface, messages should be filled with as many subsequent sections as possible. In case that the section type does not differ from a format and a value of the U-plane application header or a format of the U-plane section header, data in a section of another section type may be mixed within a single U-plane message for a given eAxC.

Referring to FIG. 9, a U-plane message 900 may include transport header (e.g., eCPRI header or IEEE 1914.3) information, common header information 910, section header information 921 and 922, and individual PRB information 931 and 932.

The transport header may include 'ecpriVersion', 'ecpriReserved', 'ecpriConcatenation', 'ecpriMessage', 'ecpriPayload', 'ecpriRtcid/ecpriPcid', and 'ecpriSeqid' as described above.

The common header information 910 may include 'dataDirection' indicating a data transmission direction of a base station (e.g., gNB), 'payloadVersion' indicating a valid payload protocol version of IEs in the application layer, and 'filterindex' indicating an index for a channel filter between IQ data and an air interface to be used in both DL and UL.

The common header information 910 may include information indicating a location of a time resource to which a message may be applied. The location of the time resource may be indicated by a frame, a subframe, a slot, or a symbol. The common header information 910 may include 'frameId' indicating a frame number, 'subframeId' indicating a subframe number, 'slotId' indicating a slot number, and 'SymbolId' indicating a symbol number. The frame is determined based on a 256 modulo operation. The subframe has a unit of 1ms included in a frame of 10ms. The slot number is numbered within the subframe, and the maximum size may be 1, 2, 4, 8, or 16 according to the numerology.

The section header information 921 and 922 may include section header information 610 of FIG. 6. The modCompParam 811 and 812, which is a parameter including modulation compression information, may be included in the section header information 921 and 922 for each section. For example, the modCompParam 811 and 812 may correspond to the modCompParam 800 of FIG. 8. According to the embodiment, the modCompParam 811 and 812 may not be included in the U-plane message 900.

The modCompParam 811 and 812, which is a parameter including modulation compression information, may be configured for each section. The section header information 921 may include the modCompParam 811. 'The section header information 922 may include the modCompParam 812.

Referring to FIG. 10, a U-plane message 1000 may include transport header (e.g., eCPRI header or IEEE 1914.3) information, common header information 1010, section header information 1020, and individual PRB information 1031 and 1032.

The common header information 1010 may correspond to the common header information 910 of FIG. 9. The section header information 1020 may correspond to the section header information 610 of FIG. 6.

The individual PRB information 1031 and 1032 may include the individual PRB information 521 and 522 of FIG. 5. The modCompParam 821 and 822, which is a parameter including modulation compression information, may be included in the individual PRB information 1031 and 1032 for each PRB. For example, the modCompParam 821 and 822 may correspond to the modCompParam 800 of FIG. 8.

The modCompParam 821 and 822, which is a parameter including modulation compression information, may be configured for each RB. First PRB information 1031 may include the modCompParam 821. Second PRB information 1032 may include the modCompParam 822.

Referring to FIG. 11, a U-plane message 1100 may include transport header information, common header information 1110, section header information 1120, and individual PRB information 1130.

The common header information 1110 may correspond to the common header information 910 of FIG. 9. The section header information 1120 may correspond to the section header information 610 of FIG. 6.

The individual PRB information 1130 may include individual RE information. The modCompParam 831 and 832, which is a parameter including modulation compression information, may be included in the individual PRB information 1130 for each PRB. For example, the modCompParam 831 and 832 may correspond to the modCompParam 800 of FIG. 8. The modCompParam 831 and 832, which is a parameter including modulation compression information, may be configured for each RE. The individual PRB information 1130 may include the modCompParam 831 and 832. Although only modCompParam 831 and 832 are illustrated for convenience of explanation, modCompParam according to 12 REs may be configured.

For example, the modCompParam 831 may follow a first in-phase sample (iSample) and a first quadrature sample (qSample). The modCompParam 831 may include modulation compression information on the first iSample and the first qSample.

For example, the modCompParam 832 may follow a second in-phase sample (iSample) and a second quadrature sample (qSample). The modCompParam 832 may include modulation compression information on the second iSample and the second qSample.

Referring to FIGS. 9 to 11, an M-plane parameter to support a U-plane message 900, 1000, or 1100 may be configured. A negotiation protocol between DU and RU to support a U-plane message 900, 1000, or 1100 may be set.

For example, at least one M-plane parameter to check whether DU and RU support a U-plane message 900, 1000, or 1100 may be configured. A transfer and negotiation protocol for exchanging at least one M-plane parameter between the DU and RU may be configured. The transfer and negotiation protocol for exchanging the at least one M-plane parameter may be performed according to operation 751 of FIG. 7B.

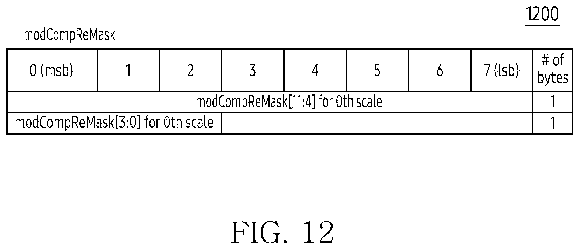

FIG. 12 illustrates an example of a parameter including RE masking information according to embodiments.

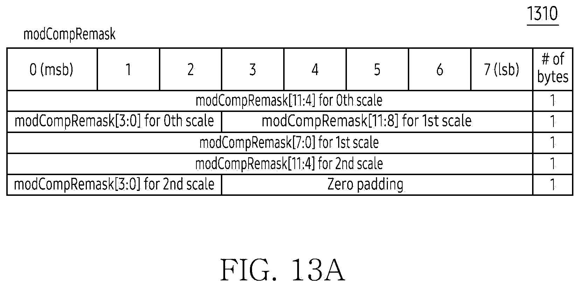

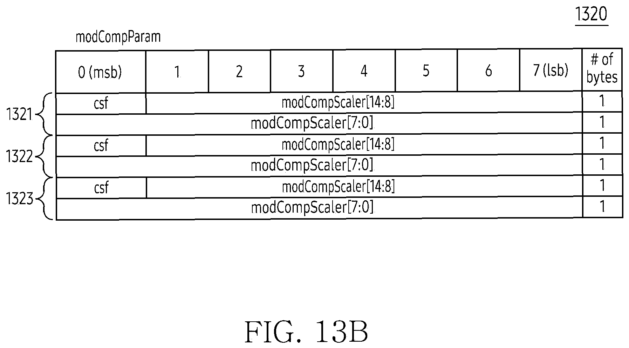

FIGS. 13A and 13B illustrate an example in which parameters including RE masking information and parameters including modulation compression information are configured as one parameter set in a U-plane message.

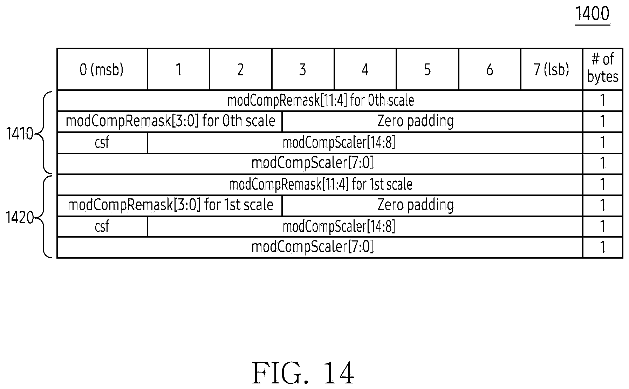

FIG. 14 illustrates an example in which parameters including RE masking information and modulation compression information are configured as one parameter set in a U-plane message.

Referring to FIGS. 12 to 14, modulation compression information for each section of a U-plane message may be included, or modulation compression information and/or RE masking information for each RB of a U-plane message may be included. In FIGS. 12 to 14, modulation compression information for each section or each RB may be configured in the U-plane message as one parameter set. RE masking information for each section or each RB may be configured in the U-plane message as one parameter set.

According to an embodiment, the modulation compression information of the U-plane message may be configured as the modCompParam 800 of FIG. 8. The modCompParam 800 may include csf and modCompScaler.

Referring to FIG. 12, the RE masking information of the U-plane message may be configured with modCompRemask 1200. The modCompRemask 1200 may be configured with 12 bits. The modCompRemask 1200 may include information on RE mask to which the modCompParam 800 is applied. According to an embodiment, a plurality of modCompRemasks 1200 may be included in one section. For example, the sum of all Remasks may be 0xfff. As an example, all bits of the modCompRemask 1200 may be set to '1'.

Referring to FIG. 13A and FIG. 13B, several modCompParams 800 may be transmitted as one parameter set. The several modCompParams 800 may be configured as modCompParam 1320. When the several modCompParams 800 are transmitted as one parameter set, the several modCompRemasks 1200 may also be transmitted as one parameter set. The several modCompRemasks 1200 may be configured as modCompRemasks 1310.

For example, the modCompRemask 1310 may include RE masking information. The modCompRemask 1310 may include first RE masking information, second RE masking information, and third masking information for one section (or one RB). The first RE masking information may mean RE masking information for a first area (or a first chunk) within one section (or one RB). The first RE masking information may be referred to as modCompRemask for $0^{th}$ scale. The second RE masking information may mean RE masking information for a second area (or a second chunk) within one section (or one RB). The second RE masking information may be referred to as modCompRemask for $1^{st}$ scale. The third RE masking information may mean RE masking information for a third area (or a third chunk) within one section (or one RB). The third RE masking information may be referred to as modCompRemask for $2^{nd}$ scale.

For example, the modCompParam 1320 may include modulation compression information. The modCompParam 1320 may include first modulation compression information 1321, second modulation compression information 1322, and third modulation compression information 1323 for one section (or one RB, or one RE). The first modulation compression information 1321 for a first area (or a first chunk) within one section (or one RB) may be referred to as $0^{th}$ modCompParam. The second modulation compression information 1322 for a second area (or a second chunk) within one section (or one RB) may be referred to as $1^{st}$ modCompParam. The third modulation compression information 1323 on a third area (or a third chunk) within one section (or one RB) may be referred to as $2^{nd}$ modCompParam.

Referring to FIG. 14, several modCompParam 800 and several modCompRemask 1200 may be configured as one parameter set. Several modCompParam 800 and several modCompRemask 1200 may be configured as one parameter set 1400. For example, several modCompParam 800 and several modCompRemask 1200 may be alternately transmitted with Param 1400 as one parameter set.

For example, the parameter set 1400 may include a parameter subset 1410 and a parameter subset 1420. For example, the parameter set 1400 may include first RE masking information, second RE masking information, first modulation compression information, and second modulation compression information within one section. The parameter subset 1410 may include the first RE masking information and the first modulation compression information. The parameter subset 1420 may include the second RE masking information and the second modulation compression information.

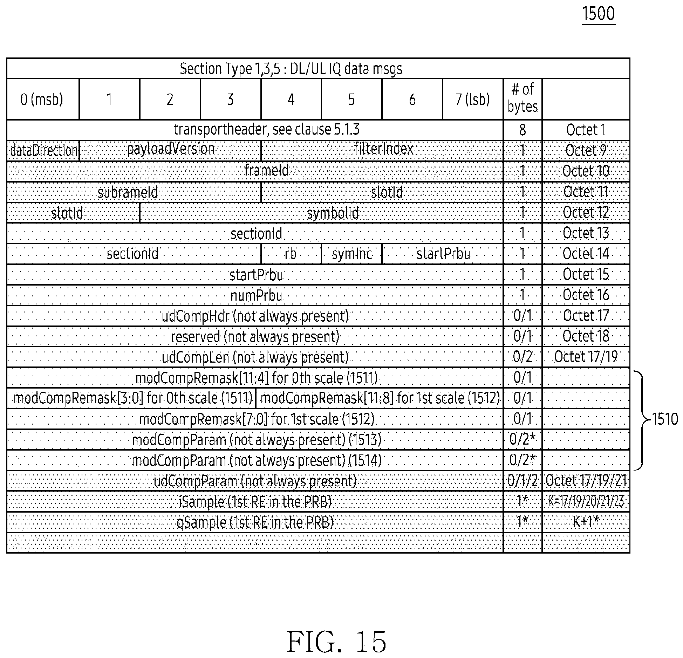

FIG. 15 illustrates an example of a U-plane message including parameters including RE masking information and modulation compression information, according to embodiments.

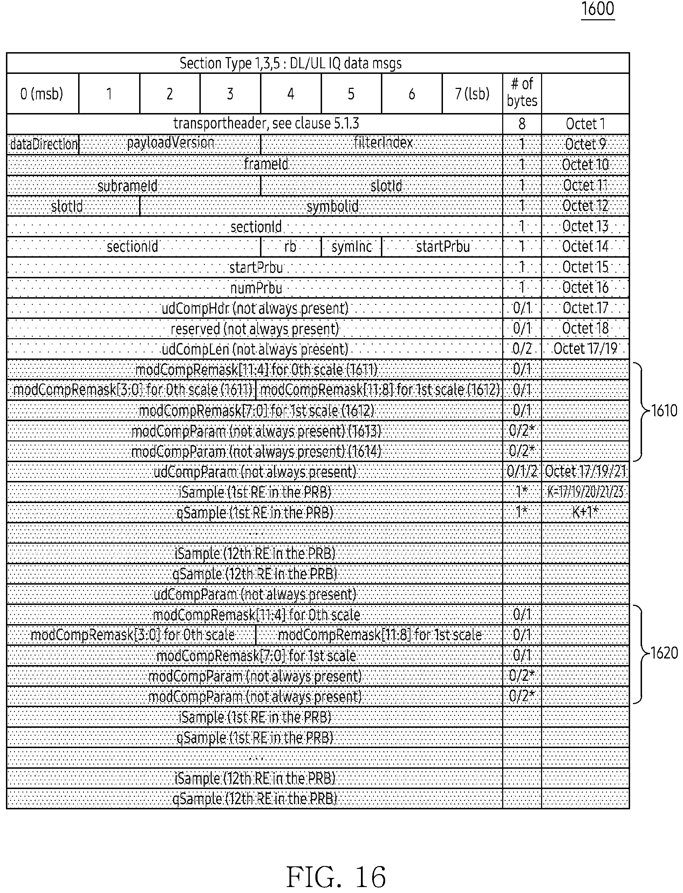

FIG. 16 illustrates an example of a U-plane message including parameters including RE masking information and modulation compression information, according to embodiments.

Referring to FIG. 15, in a U-plane message 1500, several modCompParams and several modCompRemasks may be configured as one parameter set for each section. For example, the U-plane message 1500 may include a parameter 1510. The parameter 1510 may include first RE masking information 1511 on a first area (or a first chunk), second RE masking information 1512 on a second area (or a second chunk), first modulation compression information 1513 on the first area, and second modulation compression information 1514 on the second area within one section. The first RE masking information 1511 may be referred to as modCompRemask for $0^{th}$ scale. The second RE masking information 1512 may be referred to as modCompRemask for $1^{st}$ scale. The first modulation compression information (1513) may be referred to as modCompParam. The second modulation compression information 1514 may be referred to as modCompParam. A preceding modCompParam may be the first modulation compression information 1513. A succeeding modCompParam may be the second modulation compression information 1514.

Referring to FIG. 16, in a U-plane message 1600, several modCompParams and several modCompRemasks for each RB may be configured as one parameter set. For example, the U-plane message 1600 may include a parameter 1610. The parameter 1610 may include first RE masking information 1611 on a first area within a first RB, second RE masking information 1612 on a second area within the first RB, first modulation compression information 1613 on the first area, and second modulation compression information 1614 on the second area.

The first RE masking information 1611 for the first area may be referred to as modCompRemask for $0^{th}$ scale. The second RE masking information 1612 for the second area may be referred to as modCompRemask for $1^{st}$ scale.

The first modulation compression information 1613 may be referred to as modCompParam. The second modulation compression information 1614 may be referred to as modCompParam. A preceding modCompParam may be the first modulation compression information 1613 on the first area. A succeeding modCompParam may be the second modulation compression information 1614 on the second area.

For example, the U-plane message 1600 may include a parameter 1620. The parameter 1620 may include RE masking information and modulation compression information for each of the first area and the second area within the second RB.

According to an embodiment, the parameters 1610 and 1620 may not be included in the U-plane message 1600. Although not illustrated, according to an embodiment, modulation compression information may be configured for each RE, within the U-plane message.

Referring to FIGS. 15 and 16, an M-plane parameter to support a U-plane message 1500 or 1600 may be configured. A negotiation protocol between DU and RU to support a U-plane message 1500 or 1600 may be set.

For example, at least one M-plane parameter to check whether the DU and RU support a U-plane message 1500 or 1600 may be configured. A transfer and negotiation protocol for exchanging at least one M-plane parameter between the DU and RU may be set. The transfer and negotiation protocol for exchanging the at least one M-plane parameter may be performed according to operation 751 of FIG. 7B.

FIGS. 15 and 16 illustrate an example in which modCompRemask and modCompParam are transmitted together, but are not limited thereto. The modCompRemask and the modCompParam may also be transmitted alternately.

According to an embodiment, a parameter indicating a format for transmitting modulation compression information may be set according to the above-described embodiments. For example, modCompMode may be configured to indicate a format for transmitting modulation compression information. According to a value of modCompMode, the format for transmitting modulation compression information may be changed. As an example, modCompMode may be set to 8 bits. As an example, in case that a value of modCompMode is set to '0', a format for transmitting modulation compression information may be set, so that modCompParam for each section is transmitted. As an example, in case that the value of modCompMode is set to '1', the format for transmitting modulation compression information may be set, so that modCompParam for each RB is transmitted. As an example, in case that the value of modCompMode is set to '2', the format for transmitting modulation compression information may be set, so that modCompParam for each RE is transmitted. As an example, among values of modCompMode, values for which the format for transmitting modulation compression information is not set may be set to 'reserved'.

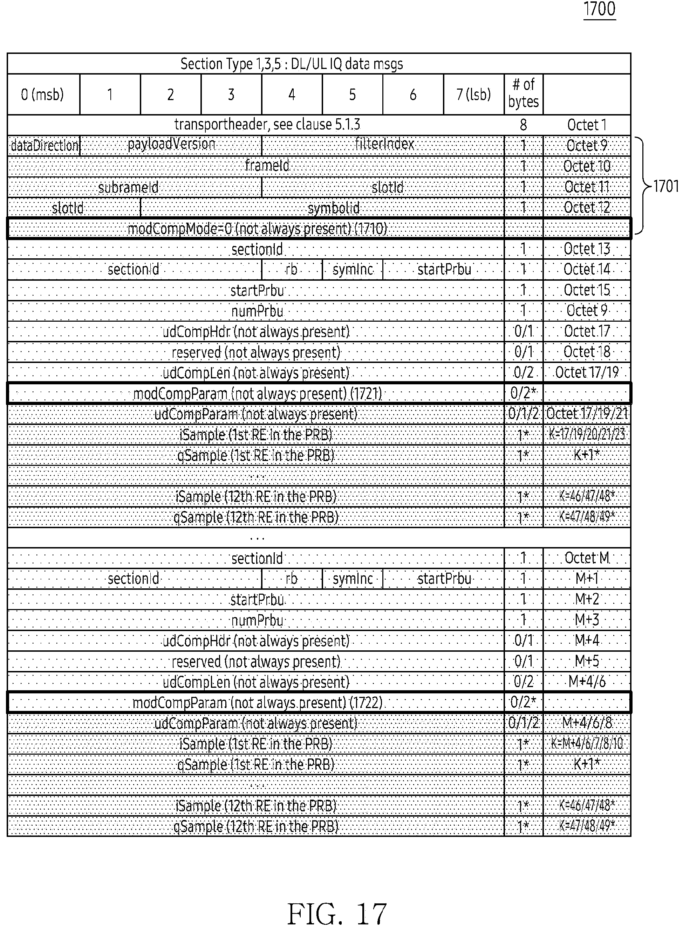

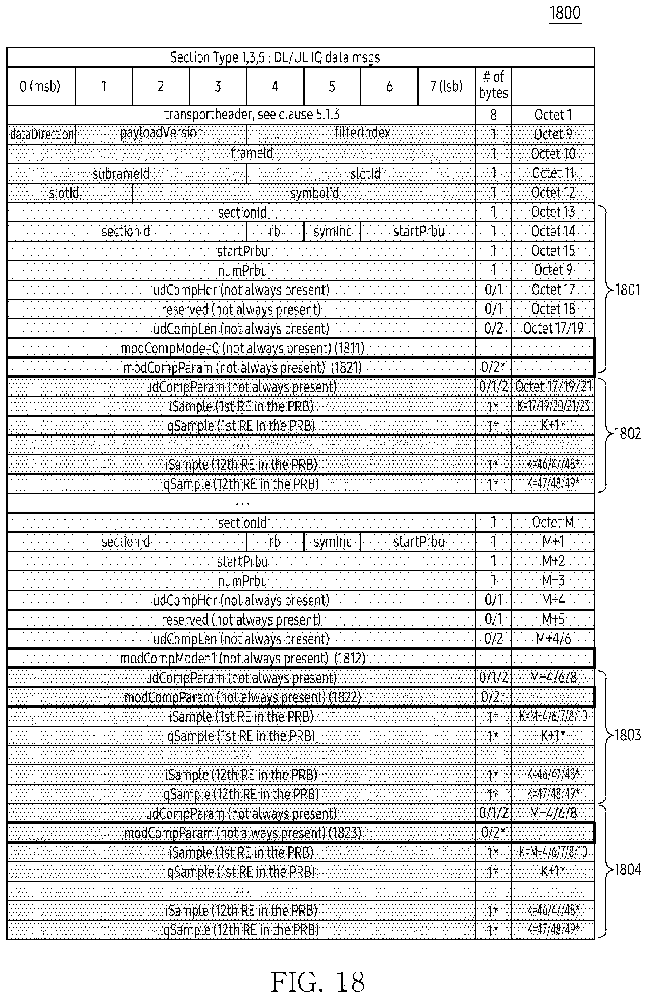

An example in which modCompMode is configured in the U-plane message may be described with reference to FIGS. 17 and 18.

FIG. 17 illustrates an example of a U-plane message including a parameter indicating a format for transmitting modulation compression information, according to embodiments.

Referring to FIG. 17, modCompMode 1710, which is a parameter indicating a format for transmitting modulation compression information, may be included in common header information 1701 of a U-plane message 1700.

For example, a value of the modCompMode 1710 may be set to '0'. Based on the value of the modCompMode 1710 being set to '0', modCompParam 1721 and 1722 for each section may be transmitted. The modCompParam 1721 may include modulation compression information for a first section. The modCompParam 1722 may include modulation compression information for a second section.

FIG. 18 illustrates an example of a U-plane message including a parameter indicating a format for transmitting modulation compression information, according to embodiments.

Referring to FIG. 18, modCompMode 1811 and 1812, which are parameters indicating a format for transmitting modulation compression information, may be included in each section. For example, the modCompMode 1811 may be included in section header information 1801 of a first section of a U-plane message 1800. The modCompMode 1812 may be included in section header information 1802 of a second section of the U-plane message 1800.

For example, a value of the modCompMode 1811 may be set to '0'. Based on the value of the modCompMode 1811 being set to '0', modCompParam 1821 including modulation compression information for the first section may be included in the section header information 1801.

For example, a value of the modCompMode 1812 may be set to '1'. Based on the value of the modCompMode 1812 being set to '1', modCompParam 1822 including modulation compression information for a first PRB in the second section may be included in first PRB information 1803, and modCompParam 1823 including modulation compression information for a second PRB in the second section may be included in second PRB information 1804.

Referring to FIGS. 17 and 18, an M-plane parameter for supporting a U-plane message 1700 or 1800 may be configured. A negotiation protocol between DU and RU to support the U-plane message 1700 or 1800 may be set. A transfer and negotiation protocol for exchanging the at least one M-plane parameter may be performed according to operation 751 of FIG. 7B.

For example, at least one M-plane parameter to check whether the DU and RU support the U-plane message 1700 or 1800 may be configured. A transfer and negotiation protocol for exchanging at least one M-plane parameter may be set between the DU and the RU.

According to an embodiment, a compression technique for transmitting modulation compression information through a U-plane message may be defined. The compression technique (e.g., 4-bit 'udCompMeth') may be defined as shown in the table below.

[Table 6]

| udCompMeth | compression method | udIqWidth meaning |
|---|---|---|
| 0000b | no compression | bitwidth of each uncompressed I and Q value |
| 0001b | Block floating point (BFP) | bitwidth of each I and Q mantissa value |
| 0010b | Block scaling | bitwidth of each I and Q scaled value |
| 0011b | μ -law | bitwidth of each compressed I and Q value |
| 0100b | Modulation compression | bitwidth of each compressed I and Q value |
| 0101b | BFP +selective RE sending | bitwidth of each compressed I and Q value |
| 0110b | Mod-compr + selective RE sending | bitwidth of each compressed I and Q value |
| 0111b | Mod-compr + MC information | bitwidth of each compressed I and Q value |
| 1000b-1111b | Reserved for further methods | depends on the specific compression method |

Referring to Table 6, when a compression technique is used based on mod-compr and modulation compression information (i.e., MC information), a value of 'udCompMeth' may be set to '0111b'. According to an embodiment, when a compression technique is used based on mod-compr and modulation compression information (i.e., MC information), the value of 'udCompMeth' may be set to one of values set as a reserved field.

According to an embodiment, mcReMaskMode indicating a method by which RE masking information is configured (or exists) within a section may be set. numMcReMask indicating the number of remasks of each PRB may be set. The mcReMaskMode and the numMcReMask may be defined as shown in the table below.

[Table 7]

| 0(msb) | 1 | 2 | 3 | 4 | 5 | 6 | 7 | # of bytes | |
|---|---|---|---|---|---|---|---|---|---|
| mcReMaskMode | | reserved | | numMcReMask | | | | 1 | |

Referring to Table 7, mcReMaskMode may be set to 2 bits. In case that a value of mcReMaskMode is set to ’00’ (or ’00b’), remask may not be set. In case that the value of mcReMaskMode is set to ’01’ (or ’01b’), mcReMask may be set per section. In case that the value of mcReMaskMode is set to ’10’ (or ’10b’), mcReMask and optional remask may be set per PRB. In case that the value of mcReMaskMode is set to ’10’, the existing selective RE sending method may be applied. For example, in case that the sum of remasks is not 0xfff, RE at a position designated as ’0’ in remask may be removed from the U-plane message. For example, numMcReMask may be set to 4 bits.

According to an embodiment, mcReMaskMode and numMcReMask may be transmitted through the M-plane message. For example, in a static compression mode, mcReMaskMode and numMcReMask may be transmitted through the M-plane messages.

According to an embodiment, in a dynamic compression mode, mcReMaskMode and numMcReMask may be transmitted through a reserved fields of udCompHdr of sections within the U-plane message.

According to an embodiment, in Table 6, in case that udCompMeth is set to ’0111b’, udCompParam may include a number of modCompParam corresponding to numMcReMask. Hereinafter, in the dynamic compression mode, an example in which modCompParam is configured in a U-plane message according to a value of mcReMaskMode may be described.

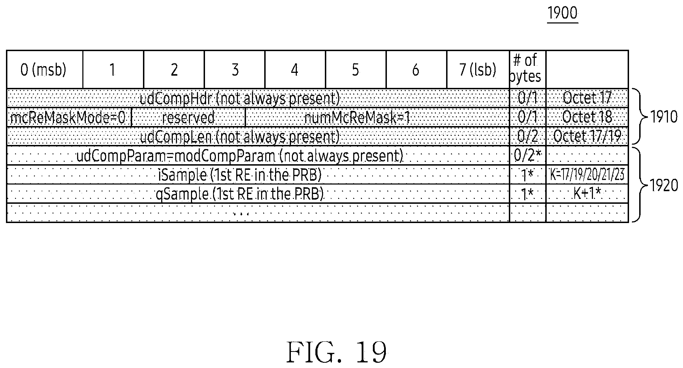

FIG. 19 illustrates an example of a U-plane message including a parameter indicating a method by which RE masking information is configured in a section and a parameter indicating the number of remasks of each PRB, according to embodiments.

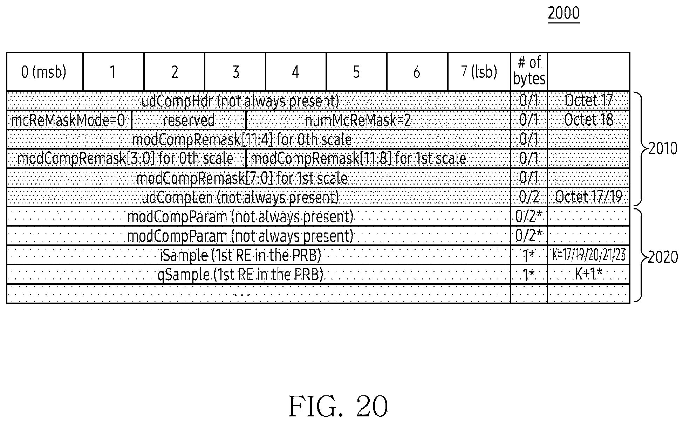

FIG. 20 illustrates an example of a U-plane message including a parameter indicating a method by which RE masking information is configured in a section and a parameter indicating the number of remasks of each PRB, according to embodiments.

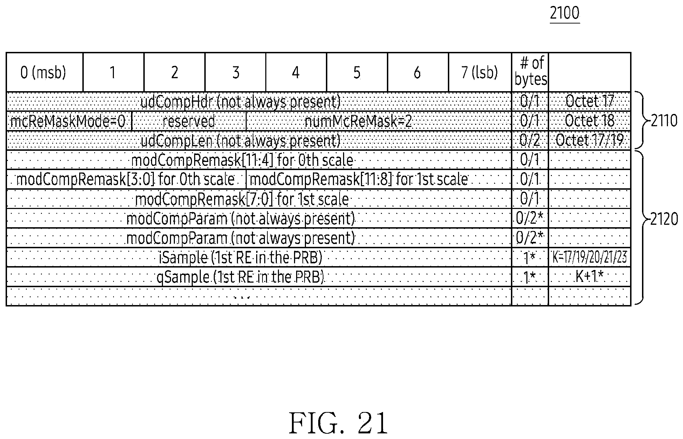

FIG. 21 illustrates an example of a U-plane message including a parameter indicating a method by which RE masking information is configured in a section and a parameter indicating the number of remasks of each PRB, according to embodiments.

Referring to FIG. 19, an area 1900 may be a portion of a U-plane message. The area 1900 may include section header information 1910 and PRB information 1920. The section header information 1910 may include mcReMaskMode, which is a parameter indicating a method by which RE masking information is configured within the section, and numMcReMask, which is a parameter indicating the number of remasks of PRB.

For example, a value of mcReMaskMode may be set to ’0’ (or ’00b’). A value of numMcReMask may be set to ’1’. Based on the value of mcReMaskMode being set to ’0’, the value of numMcReMask may be set to ’1’. For example, in case that the value of mcReMaskMode is set to ’0’ (or ’00b’), the value of numMcReMask may always be set to ’1’.

For example, in case that the value of mcReMaskMode is set to ’0’ and the value of numMcReMask is set to ’1’, udCompParam (or modCompParam) including modulation compression information of PRB may be included in PRB information 1920.

Referring to FIG. 20, an area 2000 may be a portion of a U-plane message. The area 2000 may include section header information 2010 and PRB information 2020. The section header information 2010 may include mcReMaskMode, which is a parameter indicating a method by which RE masking information is configured within the section, and numMcReMask, which is a parameter indicating the number of remasks in the PRB.

For example, the value of mcReMaskMode may be set to ’1’ (or ’01b’). The value of numMcReMask may be set to ’2’. Based on the value of mcReMaskMode being set to ’1’, the value of numMcReMask may be set to ’2’.

For example, in case that the value of mcReMaskMode is set to ’1’ (or ’01b’) and the value of numMcReMask is set to ’2’, modCompRemask may be included in the section header information 2010. In case that the value of mcReMaskMode is set to ’1’ and the value of numMcReMask is set to ’2’, udCompParam 2030 including modulation compression information of PRB may be included in the PRB information 2020. The udCompParam 2030 may include a number (e.g., two) of modCompParam corresponding to the value of numMcReMask.

Referring to FIG. 21, an area 2100 may be a portion of a U-plane message. The area 2100 may include section header information 2110 and PRB information 2120. The section header information 2110 may include mcReMaskMode, which is a parameter indicating a method by which RE masking information is configured within the section, and numMcReMask, which is a parameter indicating the number of remasks in the PRB.

For example, the value of mcReMaskMode may be set to ’2’ (or ’10b’). The value of numMcReMask may be set to '2'. Based on the value of mcReMaskMode being set to '2', the value of numMcReMask may be set to '2'.

For example, in case that the value of mcReMaskMode is set to '2' (or '10b') and the value of numMcReMask is set to '2', udCompParam 2130 may be included in the PRB information 2120. The udCompParam 2130 may include modCompRemask and modCompParam.

Referring to FIGS. 19 to 21, an M-plane parameter to support an area 1900, 2000, or 2100, which is a portion of a U-plane message, may be configured. A negotiation protocol between DU and RU to support a U-plane message including the above-described area 1900, 2000, or 2100 may be set. The transfer and negotiation protocol for exchanging at least one M-plane parameter may be performed according to operation 751 of FIG. 7B.

For example, at least one M-plane parameter to check whether the DU and RU support a U-plane message including the above-described area 1900, 2000, or 2100 may be configured. A transfer and negotiation protocol may be established to exchange at least one M-plane parameter between the DU and RU.

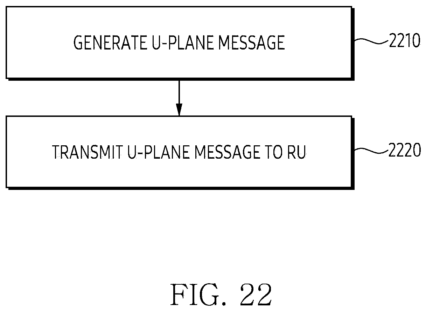

FIG. 22 is a flowchart illustrating an operation of a DU according to embodiments.

Referring to FIG. 22, in operation 2210, a DU (e.g., the DU 710 of FIG. 7A and FIG. 7B) (or a processor of the DU) may generate a user-plane (U-plane) message. For example, after a control-plane (C-plane) message including control information is transmitted, the DU may generate a U-plane message, which is configured with modulation compression information and a section and includes modulated and compressed data.

For example, the DU may exchange a management-plane (M-plane) message with RU (e.g., the RU 720 of FIGS. 7A and 7B). The DU may exchange the M-plane message with the RU, in order to check whether a specified format of the U-plane message is supported in the RU. For example, the DU may transmit, to the RU, an M-plane message including format information of a U-plane message before transmitting a C-plane message.

The DU may configure at least one M-plane parameter to check whether the RU supports a designated format of the U-plane message. The DU may identify that the RU supports a designated format of the U-plane message, based on a transfer protocol and a negotiation protocol for exchanging at least one M-plane parameter.

For example, the DU may transmit the C-plane message to the RU. The C-plane message may include section information. In embodiments of the present disclosure, since modulation compression information is included in the U-plane message, the C-plane message may not include section extension information for modulation compression. As an example, the C-plane message may not include Section Extension 4. In addition, as an example, the C-plane message may not include Section Extension 5.

For example, the U-plane message may include modulation compression information and modulated and compressed data. The modulated and compressed data may be configured in units of sections. The DU may modulate and compress data based on a modulation compression technique. According to an embodiment, the U-plane message may include at least one section. Based on the U-plane message being configured with at least one section, modulation compression information by area may be configured within each section of at least one section or within one section. The modulation compression information may include a flag (e.g. 'csf') for indicating whether a constellation is moved and scale information (e.g. 'modCompScaler') for indicating a scaler value.

According to an embodiment, the U-plane message may include section header information for the section. The section header information may include modulation compression information. The modulation compression information may be included within the section header information.

According to an embodiment, the U-plane message may include PRB information configured based on the section. The PRB information may include modulation compression information. For example, the modulation compression information may include a flag for each of at least one PRB included in the PRB information and scale information for each of at least one PRB.

According to an embodiment, the U-plane message may include RE masking information for at least one area set within the section. For example, the section may be divided into at least one area based on the RE masking information. The modulation compression information may include a flag for each of the at least one area and scale information for each of the at least one area.

According to an embodiment, the U-plane message may include section header information for the section and PRB information configured based on the section. The section header information may include information for indicating a designated format in which RE masking information for at least one area set within the section is configured within the U-plane. Based on the designated format, RE masking information for at least one area may be included within the U-plane. For example, RE masking information may be included in one of the section header information and the PRB information. As an example, based on a first format, RE masking information may be included in the section header information. Based on a second format, RE masking information may be included in the PRB information.

In operation 2220, the DU may transmit a U-plane message to the RU through a fronthaul interface. For example, the DU may transmit a U-plane message configured according to the embodiments described above to the RU. For example, the DU may transmit a U-plane message including modulation compression information and modulated and compressed data to the RU.

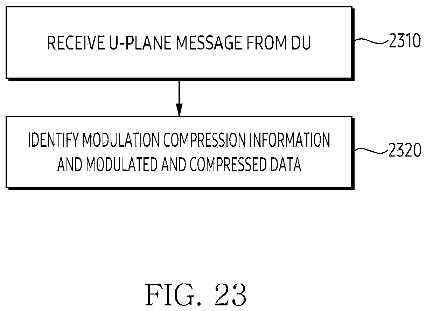

FIG. 23 is a flowchart illustrating an operation of an RU according to embodiments.

Referring to FIG. 23, in operation 2310, an RU (e.g., the RU 720 of FIGS. 7A and 7B) (or a processor of the RU) may receive a user plane (U-plane) message from a DU (e.g., the DU 710 of FIGS. 7A and 7B).

The RU may exchange an M-plane message with the DU to check whether a designated format of the U-plane message is supported in the DU. For example, the RU may receive a management plane (M-plane) message including format information of the U-plane message from the DU, before receiving a control plane (C-plane) message.

The RU may identify that the DU supports a designated format of the U-plane message, based on a transfer protocol and a negotiation protocol for exchanging at least one M-plane parameter to check whether a designated format of the U-plane message is supported.

For example, the RU may receive a control plane (C-plane) message from the DU. The C-plane message may include section information. In embodiments of the present disclosure, since modulation compression information is included in the U-plane message, the C-plane message may not include section extension information for modulation compression. As an example, the C-plane message may not include Section Extension 4. In addition, as an example, the C-plane message may not include Section Extension 5.

In operation 2320, the RU may identify modulation compression information and modulated and compressed data included in the received U-plane message. For example, the RU may identify modulation compression information and modulated and compressed data, based on the U-plane message received from the DU.

For example, a U-plane message may include modulation compression information and modulated and compressed data. The modulated and compressed data may be configured in units of sections. The DU may modulate and compress data based on a modulation compression technique. According to the embodiment, the U-plane message may include at least one section. Based on the U-plane message being configured with at least one section, modulation compression information by area may be configured within each section of at least one section or within one section. The modulation compression information may include a flag (e.g., 'csf') for indicating whether a constellation is moved and scale information (e.g., 'modCompScaler') for indicating a scaler value.

According to an embodiment, the U-plane message may include section header information for the section. The section header information may include modulation compression information. The modulation compression information may be included within the section header information.

According to an embodiment, the U-plane message may include PRB information configured based on the section. The PRB information may include modulation compression information. For example, the modulation compression information may include a flag for each of at least one PRB included in PRB information and scale information for each of at least one PRB.

According to an embodiment, the U-plane message may include RE masking information for at least one area set within the section. For example, the section may be divided into at least one area based on the RE masking information. The modulation compression information may include a flag for each of the at least one area and scale information for each of the at least one area.

According to an embodiment, the U-plane message may include section header information for the section and PRB information configured based on the section. The section header information may include information for indicating a designated format in which RE masking information for at least one area set within the section is configured within the U-plane. Based on the designated format, RE masking information for at least one area may be included within the U-plane. For example, RE masking information may be included in one of the section header information and the PRB information. As an example, based on a first format, RE masking information may be included in the section header information. Based on a second format, RE masking information may be included in the PRB information.

According to an embodiment, a method performed by a distributed unit (DU) may comprise, after a control plane (C-plane) message including control information is transmitted, generating a user plane (U-plane) message including modulation compression information and modulated and compressed data configured as a section. The method may comprise transmitting, to a radio unit (RU), the U-plane message through a fronthaul interface. The modulation compression information may include a flag for indicating whether constellation is moved, and scale information for indicating a scaler value.

According to an embodiment, the U-plane message may include section header information for the section. The section header information may include the modulation compression information.

According to an embodiment, the U-plane message may include physical resource block (PRB) information configured based on the section. The PRB information may include the modulation compression information. The modulation compression information may include a flag for each of at least one PRB included in the PRB information and scale information for each of the at least one PRB.

According to an embodiment, the U-plane message may include physical resource block (PRB) information configured based on the section. The PRB information may include the modulation compression information. The modulation compression information may include a flag for each of a plurality of resource elements (REs) and scale information for each of the plurality of REs.

According to an embodiment, the U-plane message may include resource element (RE) masking information for at least one area set within the section. The modulation compression information may include a flag for each of the at least one area and scale information for each of the at least one area.

According to an embodiment, the U-plane message may include section header information for the section and physical resource block (PRB) information configured based on the section. The section header information may include information indicating a designated format that resource element (RE) masking information for at least one area set within the section configured within the U-plane. The RE masking information may include one of the section header information and the PRB information.

According to an embodiment, the method may comprise transmitting a management plane (M-plane) message including format information of the U-plane message through the fronthaul interface to the RU.

According to an embodiment, a method performed by a radio unit (RU) may comprise, after a control plane (C-plane) message including control information is received, receiving a user plane (U-plane) message including modulation compression information and modulated and compressed data configured as a section, through a fronthaul interface from a distributed unit (DU). The method may comprise identifying, based on the U-plane message, the modulation compression information and the modulated and compressed data. The modulation compression information may include a flag for indicating whether constellation is moved, and scale information for indicating a scaler value.

According to an embodiment, the U-plane message may include section header information for the section. The section header information may include the modulation compression information.

According to an embodiment, the U-plane message may include physical resource block (PRB) information configured based on the section. The PRB information may include the modulation compression information. The modulation compression information may include a flag for each of at least one PRB included in the PRB information and scale information for each of the at least one PRB.

According to an embodiment, the U-plane message may include physical resource block (PRB) information configured based on the section. The PRB information may include the modulation compression information. The modulation compression information may include a flag for each of a plurality of resource elements (REs) and scale information for each of the plurality of REs.

According to an embodiment, the U-plane message may further include resource element (RE) masking information for at least one area set within the section. The modulation compression information may include a flag for each of the at least one area and scale information for each of the at least one area.

According to an embodiment, the U-plane message may include section header information for the section and physical resource block (PRB) information configured based on the section. The section header information may include information indicating a designated format that resource element (RE) masking information for at least one area set within the section configured within the U-plane. The RE masking information may include one of the section header information and the PRB information.

According to an embodiment, the method may comprise receiving a management plane (M-plane) message including format information of the U-plane message through the fronthaul interface from the RU.

According to an embodiment, an electronic device performed by a distributed unit (DU) may comprise at least one transceiver including a fronthaul transceiver, and at least one processor coupled with the at least one transceiver. The at least one processor may be configured to, after a control plane (C-plane) message including control information is transmitted, generate a user plane (U-plane) message including modulation compression information and modulated and compressed data configured as a section. The at least one processor may be configured to transmit, to a radio unit (RU), the U-plane message through a fronthaul interface. The modulation compression information may include a flag for indicating whether constellation is moved, and scale information for indicating a scaler value.

According to an embodiment, the U-plane message may include section header information for the section. The section header information may include the modulation compression information.

According to an embodiment, the U-plane message may include physical resource block (PRB) information configured based on the section. The PRB information may include the modulation compression information. The modulation compression information may include a flag for each of at least one PRB included in the PRB information and scale information for each of the at least one PRB.

According to an embodiment, the U-plane message may include physical resource block (PRB) information configured based on the section. The PRB information may include the modulation compression information. The modulation compression information may include a flag for each of a plurality of resource elements (REs) and scale information for each of the plurality of REs.

According to an embodiment, the U-plane message may further include resource element (RE) masking information for at least one area set within the section. The modulation compression information may include a flag for each of the at least one area and scale information for each of the at least one area.

According to an embodiment, the U-plane message may include section header information for the section and physical resource block (PRB) information configured based on the section. The section header information may include information indicating a designated format that resource element (RE) masking information for at least one area set within the section configured within the U-plane. The RE masking information may include one of the section header information and the PRB information.

According to an embodiment, the at least one processor may be configured to transmit a management plane (M-plane) message including format information of the U-plane message through the fronthaul interface to the RU.

According to an embodiment, an electronic device performed by a radio unit (RU) may comprise at least one transceiver including a fronthaul transceiver, and at least one processor coupled with the at least one transceiver. The at least one processor may be configured to, after a control plane (C-plane) message including control information is received, receive a user plane (U-plane) message including modulation compression information and modulated and compressed data configured as a section through a fronthaul interface from a distributed unit (DU). The at least one processor may be configured to identify, based on the U-plane message, the modulation compression information and the modulated and compressed data. The modulation compression information may include a flag for indicating whether constellation is moved, and scale information for indicating a scaler value.

According to an embodiment, the U-plane message may include section header information for the section. The section header information may include the modulation compression information.

According to an embodiment, the U-plane message may include physical resource block (PRB) information configured based on the section. The PRB information may include the modulation compression information, and wherein the modulation compression information may include a flag for each of at least one PRB included in the PRB information and scale information for each of the at least one PRB.

According to an embodiment, the U-plane message may include physical resource block (PRB) information configured based on the section. The PRB information may include the modulation compression information. The modulation compression information may include a flag for each of a plurality of resource elements (REs) and scale information for each of the plurality of REs.

According to an embodiment, the U-plane message may further include resource element (RE) masking information for at least one area set within the section. The modulation compression information may include a flag for each of the at least one area and scale information for each of the at least one area.

According to an embodiment, the U-plane message may include section header information for the section and physical resource block (PRB) information configured based on the section. The section header information may include information indicating a designated format that resource element (RE) masking information for at least one area set within the section configured within the U-plane. The RE masking information may include one of the section header information and the PRB information.

According to an embodiment, the at least one processor may be configured to receive a management plane (M-plane) message including format information of the U-plane message through the fronthaul interface from the RU.

According to an embodiment, a non-transitory computer readable storage medium may comprise memory storing programs including instructions. The instructions, when executed by a processor, may cause a distributed unit (DU) to perform one of methods described above performed by the DU, or a radio unit (RU) to perform one of methods described above performed by the RU.

According to the above-described embodiments, modulation compression information may be transmitted through a U-plane message. When modulation compression is used, as the modulation compression information is transmitted through the U-plane message, the number of sections set in the U-plane message may be reduced. When modulation compression is used, as the modulation compression information is transmitted through the U-plane message, the number of sections set in the U-plane message may be set to be similar to the number of sections set according to a compression technique distinct from the modulation compression. As the modulation compression information is transmitted through the U-plane message, there is an effect that an additional section is not required to be configured in the U-plane message. As the modulation compression information is transmitted through the U-plane message, there is an effect that the DU is not required to configure a section extension for additional modulation compression. The DU may reduce resources for processing the U-plane message, based on transmitting the modulation compression information through the U-plane message.

According to the above-described embodiments, when a compression technique distinct from the modulation compression is used in a dynamic manner, section fragmentation may not occur. Accordingly, a scheduling operation for configuring a section may be simplified. The RU may not refer to information of the C-plane when releasing the modulation compression on the U-plane. Therefore, according to the above-described embodiments, resources for storing C-plane information in the RU may be saved, and a matching process between the C-plane information and U-plane data may be omitted.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

**1.** A method performed by a distributed unit (DU), comprising:

after a control plane (C-plane) message including control information is transmitted, generating a user plane (U-plane) message including modulation compression information and modulated and compressed data configured as a section, and
transmitting, to a radio unit (RU), the U-plane message through a fronthaul interface,
wherein the modulation compression information includes a flag for indicating whether constellation is moved, and scale information for indicating a scaler value.

**2.** The method of claim 1, wherein the U-plane message further includes section header information for the section, and wherein the section header information includes the modulation compression information.

**3.** The method of any one of claims 1 to 2, wherein the U-plane message further includes physical resource block (PRB) information configured based on the section,

wherein the PRB information includes the modulation compression information, and
wherein the modulation compression information includes a flag for each of at least one PRB included in the PRB information and scale information for each of the at least one PRB.

**4.** The method of any one of claims 1 to 3, wherein the U-plane message further includes physical resource block (PRB) information configured based on the section,

wherein the PRB information includes the modulation compression information, and
wherein the modulation compression information includes a flag for each of a plurality of resource elements (REs) and scale information for each of the plurality of REs.

**5.** The method of any one of claims 1 to 4, wherein the U-plane message further includes resource element (RE) masking information for at least one area set within the section, and
wherein the modulation compression information includes a flag for each of the at least one area and scale information for each of the at least one area.

**6.** The method of any one of claims 1 to 5, wherein the U-plane message further includes section header information for the section and physical resource block (PRB) information configured based on the section, and

wherein the section header information includes information indicating a designated format that resource element (RE) masking information for at least one area set within the section configured within the U-plane, and wherein the RE masking information includes one of the section header information and the PRB information.

**7.** The method of any one of claims 1 to 6, further comprising:
transmitting a management plane (M-plane) message including format information of the U-plane message through the fronthaul interface to the RU.

**8.** A method performed by a radio unit (RU), comprising:

after a control plane (C-plane) message including control information is received, receiving a user plane (U-plane) message including modulation compression information and modulated and compressed data configured as a section, through a fronthaul interface from a distributed unit (DU), and
identifying, based on the U-plane message, the modulation compression information and the modulated and compressed data,
wherein the modulation compression information includes a flag for indicating whether constellation is moved, and scale information for indicating a scaler value.

**9.** The method of claim 8, wherein the U-plane message further includes section header information for the section, and wherein the section header information includes the modulation compression information.

**10.** The method of any one of claims 8 to 9, wherein the U-plane message further includes physical resource block (PRB) information configured based on the section,

wherein the PRB information includes the modulation compression information, and
wherein the modulation compression information includes a flag for each of at least one PRB included in the PRB information and scale information for each of the at least one PRB.

**11.** An electronic device performed by a distributed unit (DU), comprising:

at least one transceiver including a fronthaul transceiver;
at least one processor coupled with the at least one transceiver,
wherein the at least one processor is configured to:

after a control plane (C-plane) message including control information is transmitted, generate a user plane (U-plane) message including modulation compression information and modulated and compressed data configured as a section, and
transmit, to a radio unit (RU), the U-plane message through a fronthaul interface,
wherein the modulation compression information includes a flag for indicating whether constellation is moved, and scale information for indicating a scaler value.

**12.** The electronic device of claim 11, wherein the at least one processor is configured to perform one of methods of claims 2 to 7.

**13.** An electronic device performed by a radio unit (RU), comprising:

at least one transceiver including a fronthaul transceiver;
at least one processor coupled with the at least one transceiver,
wherein the at least one processor is configured to:

after a control plane (C-plane) message including control information is received, receive a user plane (U-plane) message including modulation compression information and modulated and compressed data configured as a section through a fronthaul interface from a distributed unit (DU), and
identify, based on the U-plane message, the modulation compression information and the modulated and compressed data,
wherein the modulation compression information includes a flag for indicating whether constellation is moved, and scale information for indicating a scaler value.

**14.** The electronic device of claim 13, wherein the at least one processor is configured to perform one of methods of claim 9 or 10.

**15.** A non-transitory computer readable storage medium including memory storing programs including instructions, wherein the instructions, when executed by a processor, cause a distributed unit (DU) to perform one of methods of claims 1 to 7 or cause a radio unit (RU) to perform one of methods of claims 8 to 10.

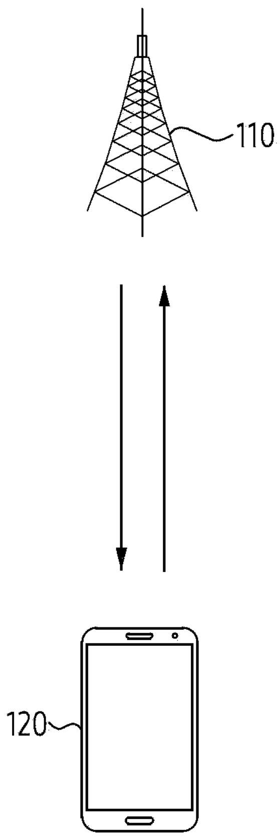


FIG. 1

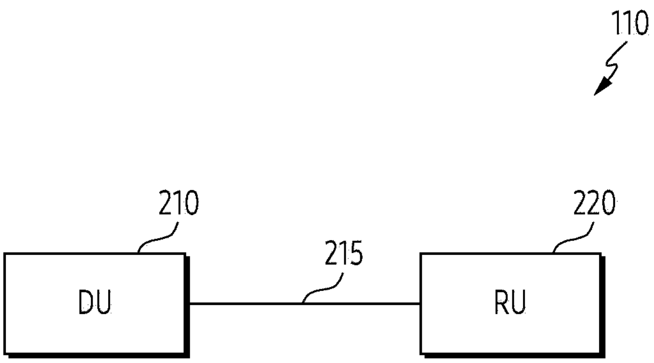


FIG. 2A

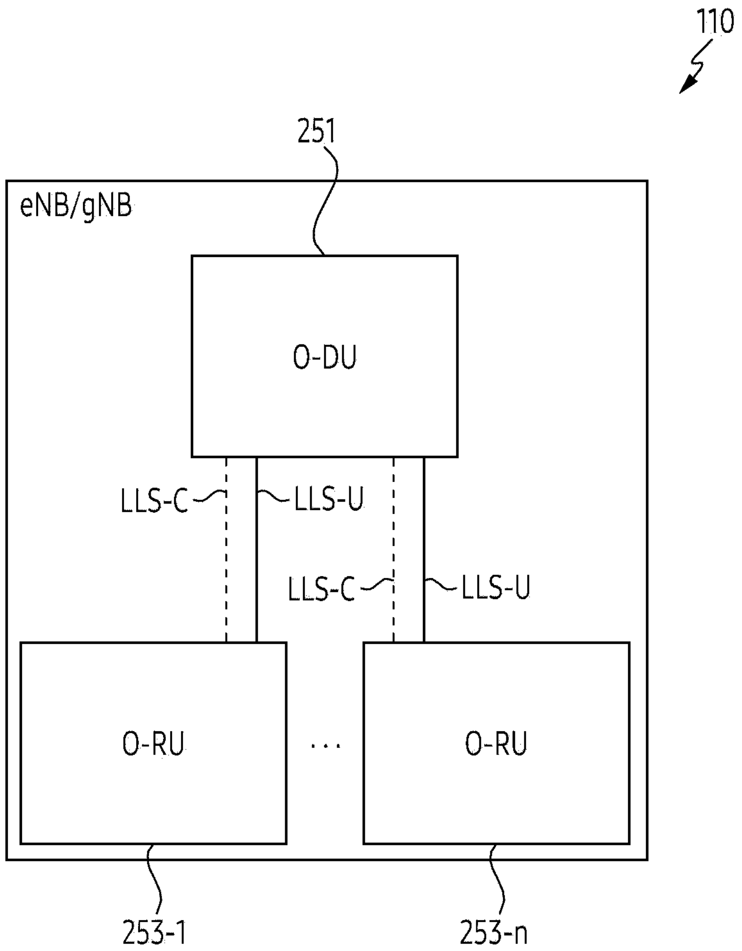


FIG. 2B

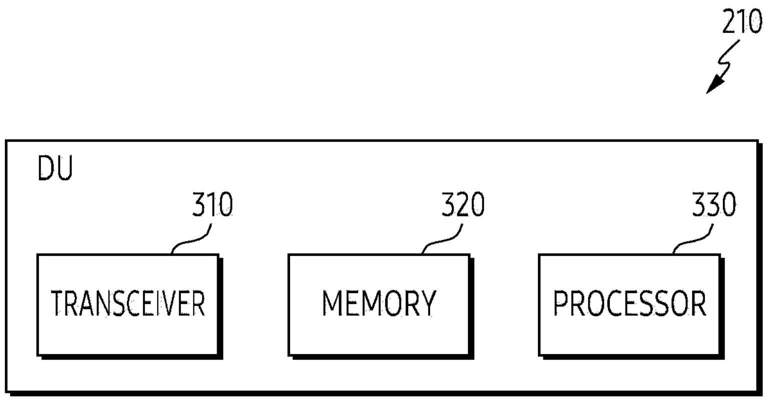


FIG. 3A

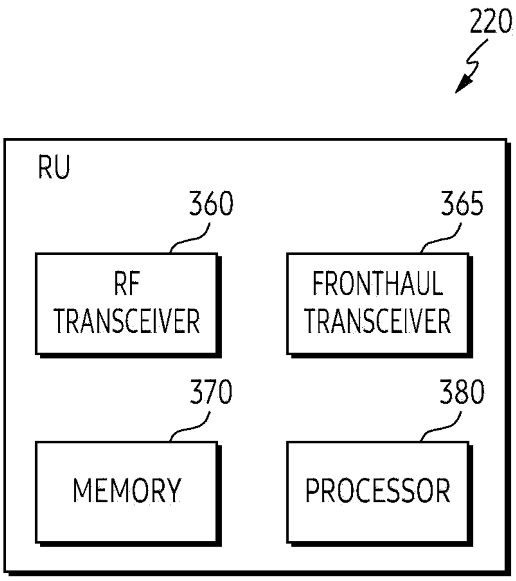
220
RU
360
RF TRANSCEIVER
365
FRONTHAUL TRANSCEIVER
370
MEMORY
380
PROCESSOR

FIG. 3B

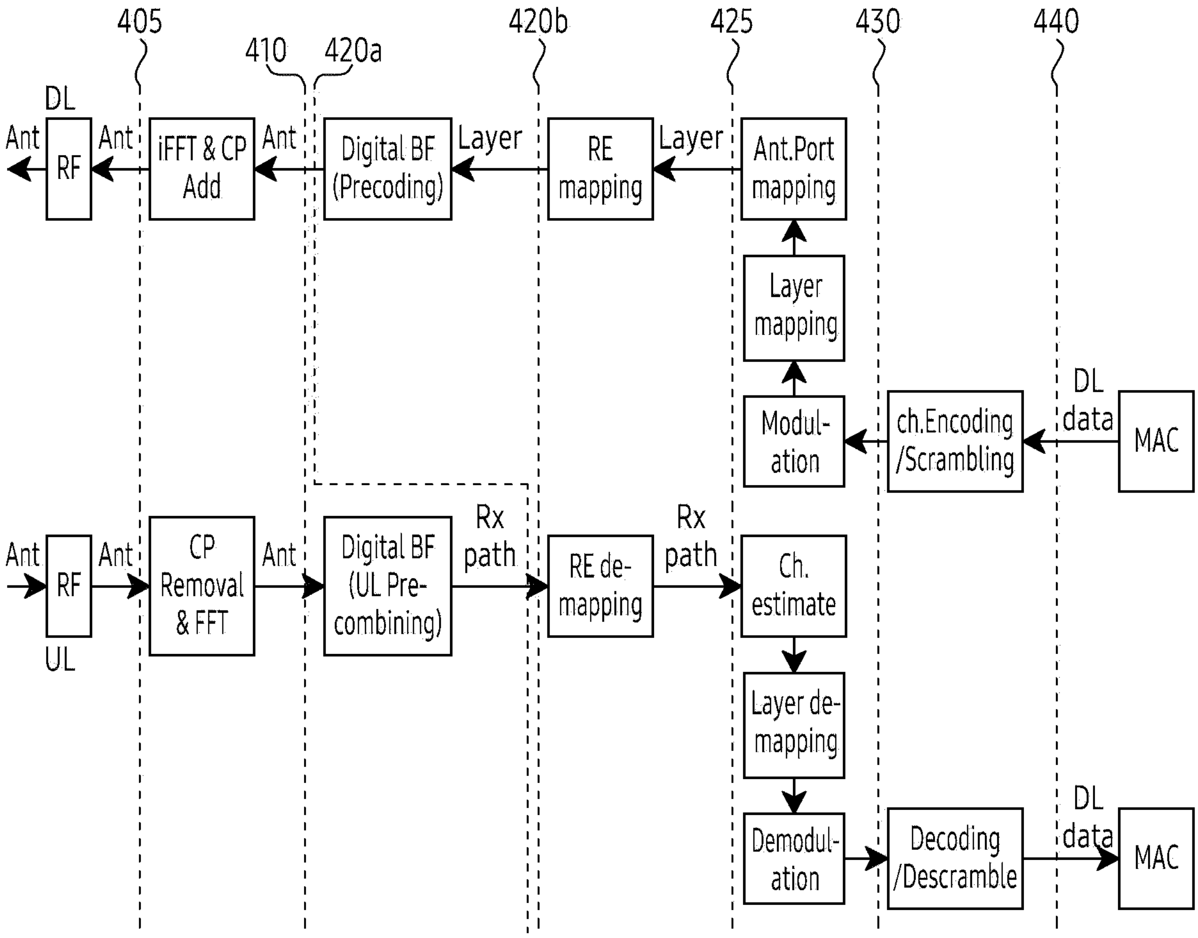
405
410
420a
420b
425
430
440
DL
Ant
RF
Ant
iFFT & CP Add
Ant
Digital BF (Precoding)
Layer
RE mapping
Layer
Ant.Port mapping
Layer mapping
Modul-ation
ch.Encoding /Scrambling
DL data
MAC
Ant
RF
UL
Ant
CP Removal & FFT
Ant
Digital BF (UL Pre-combining)
Rx path
RE de-mapping
Rx path
Ch. estimate
Layer de-mapping
Demodul-ation
Decoding /Descramble
DL data
MAC

FIG. 4

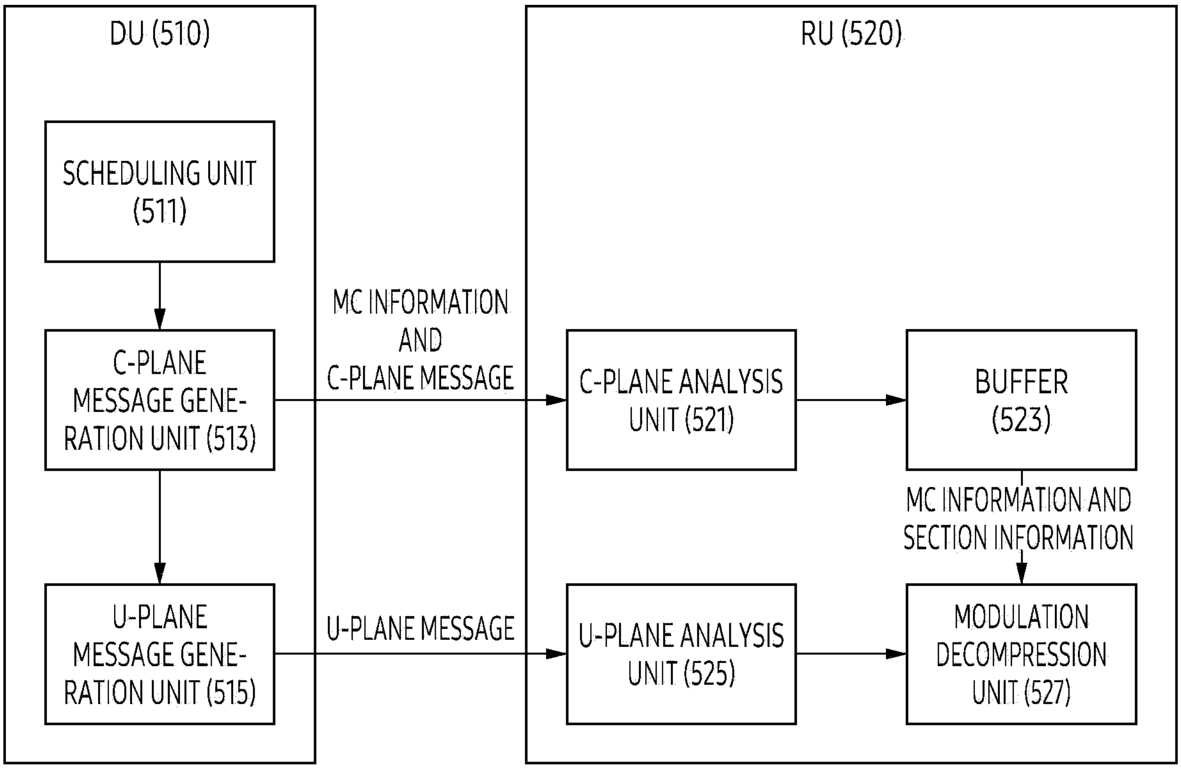
DU (510)
SCHEDULING UNIT (511)
C-PLANE MESSAGE GENE-RATION UNIT (513)
U-PLANE MESSAGE GENE-RATION UNIT (515)
MC INFORMATION AND C-PLANE MESSAGE
U-PLANE MESSAGE
RU (520)
C-PLANE ANALYSIS UNIT (521)
BUFFER (523)
MC INFORMATION AND SECTION INFORMATION
U-PLANE ANALYSIS UNIT (525)
MODULATION DECOMPRESSION UNIT (527)

FIG. 5A

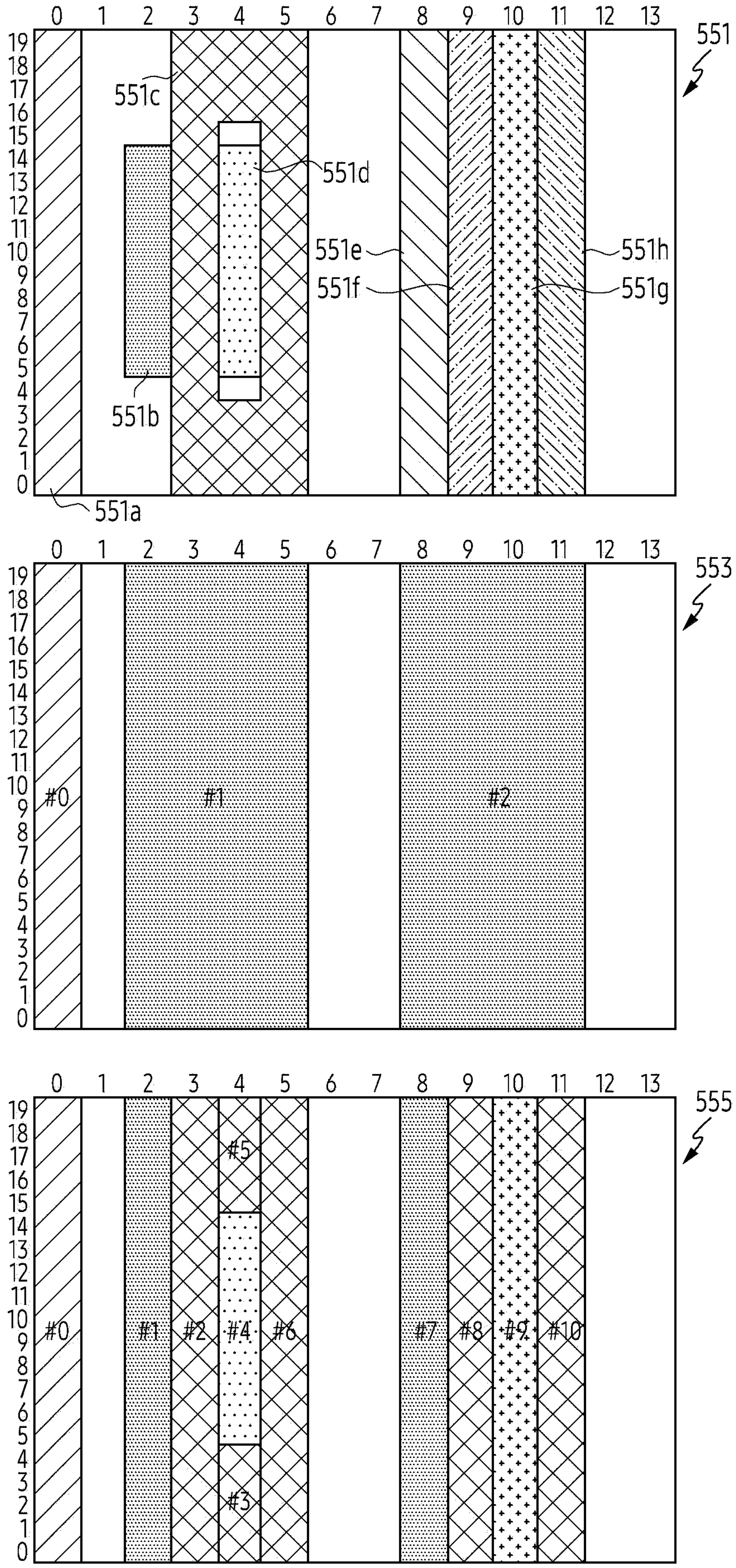
0 1 2 3 4 5 6 7 8 9 10 11 12 13
19 18 17 16 15 14 13 12 11 10 9 8 7 6 5 4 3 2 1 0
551
551a
551b
551c
551d
551e
551f
551g
551h
553
#0
#1
#2
555
#3
#4
#5
#6
#7
#8
#9
#10

FIG. 5B

600

| Section Type 1,3,5 : DL/UL IQ data msgs | | | | | | | | |
|---|---|---|---|---|---|---|---|---|
| 0 (msb) | 1 | 2 | 3 | 4 | 5 | 6 | 7 (lsb) | # of bytes |
| ecpriVersion | | | | ecpriReserved | | | ecpriConcatenation | 1 |
| ecpriMessage | | | | | | | | 1 |
| ecpriPayload | | | | | | | | 1 |
| ecpriPayload | | | | | | | | 1 |
| ecpriRtcid / ecpriPcid | | | | | | | | 1 |
| ecpriRtcid / ecpriPcid | | | | | | | | 1 |
| ecpriSeqid | | | | | | | | 1 |
| ecpriSeqid | | | | | | | | 1 |
| dataDirection | payloadVersion | | | filterIndex | | | | 1 |
| frameId | | | | | | | | 1 |
| subrameId | | | | slotId | | | | 1 |
| slotId | | symbolid | | | | | | 1 |
| sectionId | | | | | | | | 1 |
| sectionId | | | | rb | symInc | startPrbu | | 1 |
| startPrbu | | | | | | | | 1 |
| numPrbu | | | | | | | | 1 |
| udCompHdr (not always present) | | | | | | | | 0/1 |
| reserved (not always present) | | | | | | | | 0/1 |
| udCompLen (not always present) | | | | | | | | 0/2 |
| udCompParam (not always present) | | | | | | | | 0/1/2 |
| iSample (1st RE in the PRB) | | | | | | | | 1 |
| qSample (1st RE in the PRB) | | | | | | | | 1 |
| ... | | | | | | | | |
| iSample (12th RE in the PRB) | | | | | | | | 1 |
| qSample (12th RE in the PRB) | | | | | | | | 1 |
| ... | | | | | | | | |

610 (sectionId … udCompLen)

620 (udCompParam … qSample (12th RE in the PRB))

FIG. 6

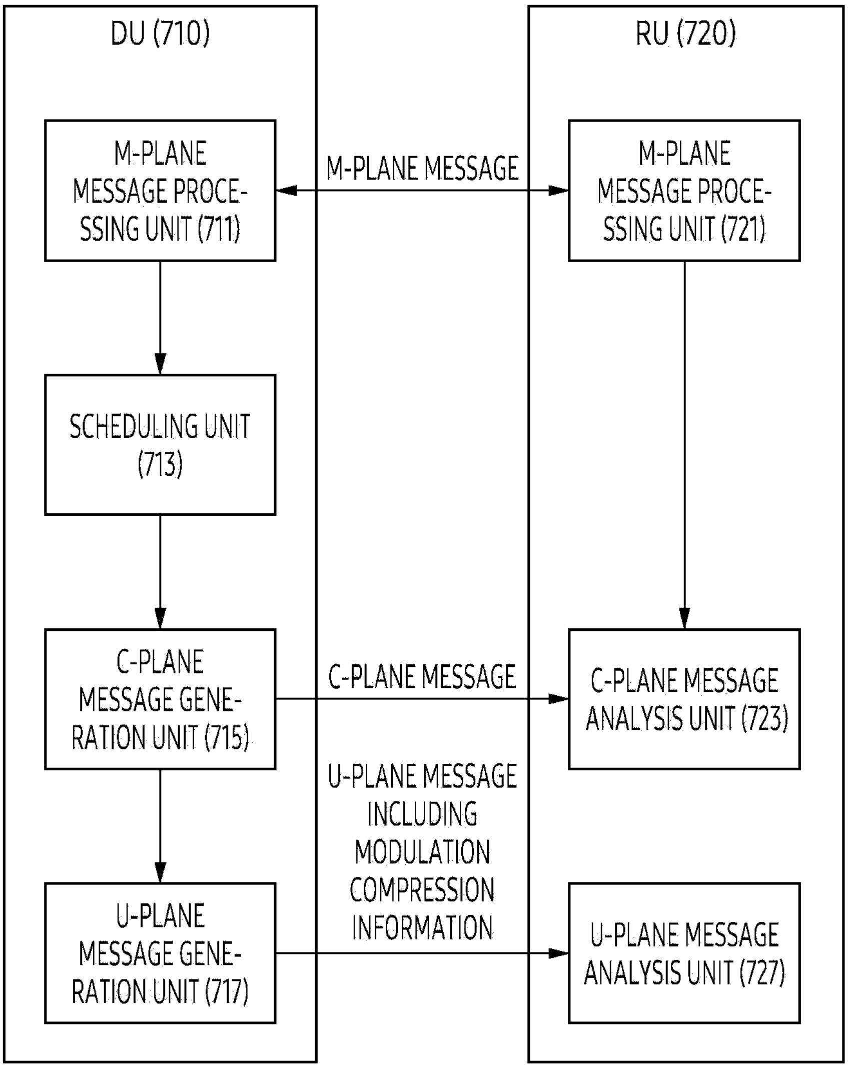
DU (710)
RU (720)
M-PLANE MESSAGE PROCE-SSING UNIT (711)
M-PLANE MESSAGE
M-PLANE MESSAGE PROCE-SSING UNIT (721)
SCHEDULING UNIT (713)
C-PLANE MESSAGE GENE-RATION UNIT (715)
C-PLANE MESSAGE
C-PLANE MESSAGE ANALYSIS UNIT (723)
U-PLANE MESSAGE INCLUDING MODULATION COMPRESSION INFORMATION
U-PLANE MESSAGE GENE-RATION UNIT (717)
U-PLANE MESSAGE ANALYSIS UNIT (727)

FIG. 7A

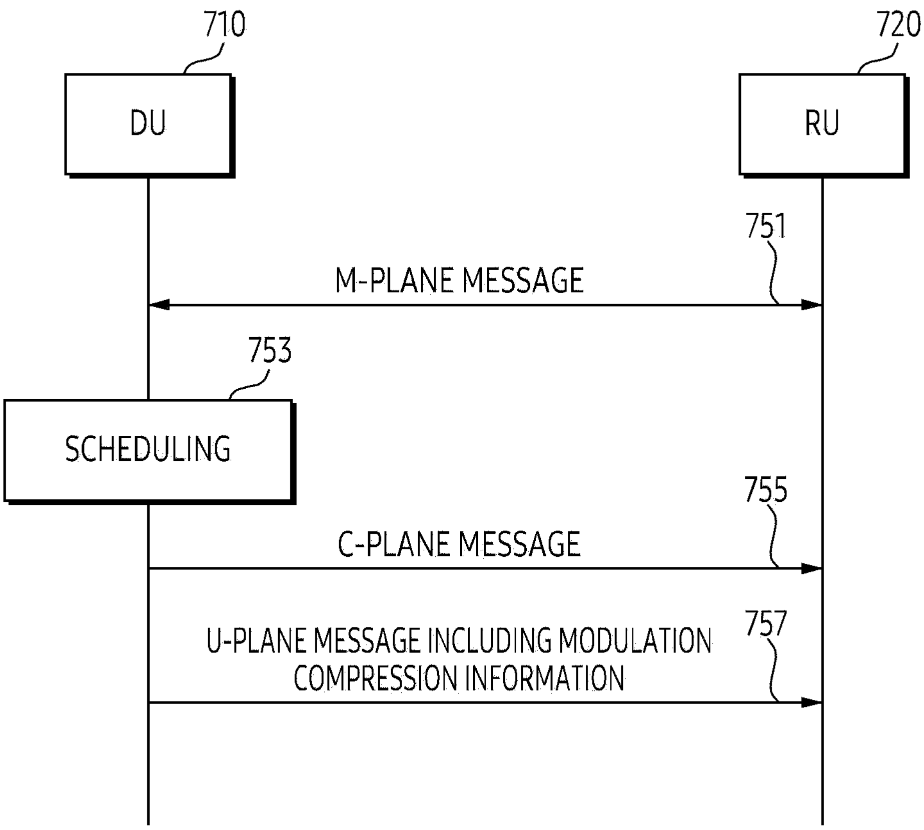
710
720
DU
RU
751
M-PLANE MESSAGE
753
SCHEDULING
755
C-PLANE MESSAGE
757
U-PLANE MESSAGE INCLUDING MODULATION
COMPRESSION INFORMATION

FIG. 7B

800

modCompParam

<table>
<tr><td>0 (msb)</td><td>1</td><td>2</td><td>3</td><td>4</td><td>5</td><td>6</td><td>7 (lsb)</td><td># of bytes</td></tr>
<tr><td>csf (810)</td><td colspan="7">modCompScaler[14:8] (820)</td><td>1</td></tr>
<tr><td colspan="8">modCompScaler[7:0] (820)</td><td>1</td></tr>
</table>

FIG. 8

900

| Section Type 1,3,5 : DL/UL IQ data msgs | | | | | | | | | | |
|---|---|---|---|---|---|---|---|---|---|---|
| 0 (msb) | 1 | 2 | 3 | 4 | 5 | 6 | 7 (lsb) | # of bytes | | |
| transportheader, see clause 5.1.3 | | | | | | | | 8 | Octet 1 | |
| dataDirection | payloadVersion | | | filterIndex | | | | 1 | Octet 9 | 910 |
| frameId | | | | | | | | 1 | Octet 10 | |
| subrameId | | | | slotId | | | | 1 | Octet 11 | |
| slotId | | symbolId | | | | | | 1 | Octet 12 | |
| sectionId | | | | | | | | 1 | Octet 13 | 921 |
| sectionId | | | | rb | symInc | startPrbu | | 1 | Octet 14 | |
| startPrbu | | | | | | | | 1 | Octet 15 | |
| numPrbu | | | | | | | | 1 | Octet 9 | |
| udCompHdr (not always present) | | | | | | | | 0/1 | Octet 17 | |
| reserved (not always present) | | | | | | | | 0/1 | Octet 18 | |
| udCompLen (not always present) | | | | | | | | 0/2 | Octet 17/19 | |
| modCompParam (not always present) (811) | | | | | | | | 0/2* | | |
| udCompParam (not always present) | | | | | | | | 0/1/2 | Octet 17/19/21 | 931 |
| iSample (1st RE in the PRB) | | | | | | | | 1* | K=17/19/20/21/23 | |
| qSample (1st RE in the PRB) | | | | | | | | 1* | K+1* | |
| ... | | | | | | | | | | |
| sectionId | | | | | | | | 1 | Octet M | 922 |
| sectionId | | | | rb | symInc | startPrbu | | 1 | M+1 | |
| startPrbu | | | | | | | | 1 | M+2 | |
| numPrbu | | | | | | | | 1 | M+3 | |
| udCompHdr (not always present) | | | | | | | | 0/1 | M+4 | |
| reserved (not always present) | | | | | | | | 0/1 | M+5 | |
| udCompLen (not always present) | | | | | | | | 0/2 | M+4/6 | |
| modCompParam (not always present) (812) | | | | | | | | 0/2* | | |
| udCompParam (not always present) | | | | | | | | 0/1/2 | M+4/6/8 | 932 |
| iSample (1st RE in the PRB) | | | | | | | | 1* | K=M+4/6/7/8/10 | |
| qSample (1st RE in the PRB) | | | | | | | | 1* | K+1* | |
| ... | | | | | | | | | | |

FIG. 9

1000

| Section Type 1,3,5 : DL/UL IQ data msgs | | | | | | | | | | |
|---|---|---|---|---|---|---|---|---|---|---|
| 0 (msb) | 1 | 2 | 3 | 4 | 5 | 6 | 7 (lsb) | # of bytes | | |
| transportheader, see clause 5.1.3 | | | | | | | | 8 | Octet 1 | |
| dataDirection | payloadVersion | | | filterIndex | | | | 1 | Octet 9 | 1010 |
| frameId | | | | | | | | 1 | Octet 10 | 1010 |
| subrameId | | | | slotId | | | | 1 | Octet 11 | 1010 |
| slotId | | symbolid | | | | | | 1 | Octet 12 | 1010 |
| sectionId | | | | | | | | 1 | Octet 13 | 1020 |
| sectionId | | | | rb | symInc | startPrbu | | 1 | Octet 14 | 1020 |
| startPrbu | | | | | | | | 1 | Octet 15 | 1020 |
| numPrbu | | | | | | | | 1 | Octet 16 | 1020 |
| udCompHdr (not always present) | | | | | | | | 0/1 | Octet 10 | 1020 |
| reserved (not always present) | | | | | | | | 0/1 | Octet 18 | 1020 |
| udCompLen (not always present) | | | | | | | | 0/2 | Octet 10/19 | 1020 |
| udCompParam (not always present) | | | | | | | | 0/1/2 | Octet 10/19/21 | 1031 |
| modCompParam (not always present) (821) | | | | | | | | 0/2* | | 1031 |
| iSample (1st RE in the PRB) | | | | | | | | 1* | K=10/19/20/21/23 | 1031 |
| qSample (1st RE in the PRB) | | | | | | | | 1* | K+1* | 1031 |
| ... | | | | | | | | | | 1031 |
| iSample (12th RE in the PRB) | | | | | | | | 1* | K+22* | 1031 |
| qSample (12th RE in the PRB) | | | | | | | | 1* | K+23* | 1031 |
| udCompParam (not always present) | | | | | | | | 0/1/2 | K+24* | 1032 |
| modCompParam (not always present) (822) | | | | | | | | 0/2* | | 1032 |
| iSample (1st RE in the PRB) | | | | | | | | 1* | K=24/25/26* | 1032 |
| qSample (1st RE in the PRB) | | | | | | | | 1* | K=25/26/27* | 1032 |
| ... | | | | | | | | | | 1032 |
| iSample (12th RE in the PRB) | | | | | | | | 1* | K=46/47/48* | 1032 |
| qSample (12th RE in the PRB) | | | | | | | | 1* | K=47/48/49* | 1032 |
| ... | | | | | | | | | | |

FIG. 10

1100

| Section Type 1,3,5 : DL/UL IQ data msgs | | | | | | | | | |
|---|---|---|---|---|---|---|---|---|---|
| 0 (msb) | 1 | 2 | 3 | 4 | 5 | 6 | 7 (lsb) | # of bytes | |
| transportheader, see clause 5.1.3 | | | | | | | | 8 | Octet 1 |
| dataDirection | payloadVersion | | | filterIndex | | | | 1 | Octet 9 |
| frameId | | | | | | | | 1 | Octet 10 |
| subrameId | | | | slotId | | | | 1 | Octet 11 |
| slotId | | symbolid | | | | | | 1 | Octet 12 |
| sectionId | | | | | | | | 1 | Octet 13 |
| sectionId | | | | rb | symInc | startPrbu | | 1 | Octet 14 |
| startPrbu | | | | | | | | 1 | Octet 15 |
| numPrbu | | | | | | | | 1 | Octet 16 |
| udCompHdr (not always present) | | | | | | | | 0/1 | Octet 17 |
| reserved (not always present) | | | | | | | | 0/1 | Octet 11 |
| udCompLen (not always present) | | | | | | | | 0/2 | Octet 17/19 |
| udCompParam (not always present) | | | | | | | | 0/1/2 | Octet 17/19/21 |
| iSample (1st RE in the PRB) | | | | | | | | 1* | K=17/19/20/21/23 |
| qSample (1st RE in the PRB) | | | | | | | | 1* | K+1* |
| modCompParam (not always present) (831) | | | | | | | | 0/2* | |
| ISample (2nd RE in the PRB) | | | | | | | | | |
| qSample (2nd RE in the PRB) | | | | | | | | | |
| modCompParam (not always present) (832) | | | | | | | | 0/2* | |
| ... | | | | | | | | | |

1110 (Octet 9 – Octet 12)

1120 (Octet 13 – Octet 17/19)

1130 (udCompParam – ...)

FIG. 11

1200

modCompReMask

| 0 (msb) | 1 | 2 | 3 | 4 | 5 | 6 | 7 (lsb) | # of bytes |
|---|---|---|---|---|---|---|---|---|
| modCompReMask[11:4] for 0th scale | | | | | | | | 1 |
| modCompReMask[3:0] for 0th scale | | | | | | | | 1 |

FIG. 12

1310

modCompRemask

| 0 (msb) | 1 | 2 | 3 | 4 | 5 | 6 | 7 (lsb) | # of bytes |
|---|---|---|---|---|---|---|---|---|
| modCompRemask[11:4] for 0th scale | | | | | | | | 1 |
| modCompRemask[3:0] for 0th scale | | | | modCompRemask[11:8] for 1st scale | | | | 1 |
| modCompRemask[7:0] for 1st scale | | | | | | | | 1 |
| modCompRemask[11:4] for 2nd scale | | | | | | | | 1 |
| modCompRemask[3:0] for 2nd scale | | | | Zero padding | | | | 1 |

FIG. 13A

1320

modCompParam

| | 0 (msb) | 1 | 2 | 3 | 4 | 5 | 6 | 7 (lsb) | # of bytes |
|---|---|---|---|---|---|---|---|---|---|
| 1321 | csf | modCompScaler[14:8] | | | | | | | 1 |
| | modCompScaler[7:0] | | | | | | | | 1 |
| 1322 | csf | modCompScaler[14:8] | | | | | | | 1 |
| | modCompScaler[7:0] | | | | | | | | 1 |
| 1323 | csf | modCompScaler[14:8] | | | | | | | 1 |
| | modCompScaler[7:0] | | | | | | | | 1 |

FIG. 13B

1400

| | 0 (msb) | 1 | 2 | 3 | 4 | 5 | 6 | 7 (lsb) | # of bytes |
|---|---|---|---|---|---|---|---|---|---|
| 1410 | modCompRemask[11:4] for 0th scale | | | | | | | | 1 |
| | modCompRemask[3:0] for 0th scale | | | | Zero padding | | | | 1 |
| | csf | modCompScaler[14:8] | | | | | | | 1 |
| | modCompScaler[7:0] | | | | | | | | 1 |
| 1420 | modCompRemask[11:4] for 1st scale | | | | | | | | 1 |
| | modCompRemask[3:0] for 1st scale | | | | Zero padding | | | | 1 |
| | csf | modCompScaler[14:8] | | | | | | | 1 |
| | modCompScaler[7:0] | | | | | | | | 1 |

FIG. 14

1500

| Section Type 1,3,5 : DL/UL IQ data msgs | | | | | | | | | |
|---|---|---|---|---|---|---|---|---|---|
| 0 (msb) | 1 | 2 | 3 | 4 | 5 | 6 | 7 (lsb) | # of bytes | |
| transportheader, see clause 5.1.3 | | | | | | | | 8 | Octet 1 |
| dataDirection | payloadVersion | | | filterIndex | | | | 1 | Octet 9 |
| frameId | | | | | | | | 1 | Octet 10 |
| subrameId | | | | slotId | | | | 1 | Octet 11 |
| slotId | | symbolid | | | | | | 1 | Octet 12 |
| sectionId | | | | | | | | 1 | Octet 13 |
| sectionId | | | | rb | symInc | startPrbu | | 1 | Octet 14 |
| startPrbu | | | | | | | | 1 | Octet 15 |
| numPrbu | | | | | | | | 1 | Octet 16 |
| udCompHdr (not always present) | | | | | | | | 0/1 | Octet 17 |
| reserved (not always present) | | | | | | | | 0/1 | Octet 18 |
| udCompLen (not always present) | | | | | | | | 0/2 | Octet 17/19 |
| modCompRemask[11:4] for 0th scale (1511) | | | | | | | | 0/1 | |
| modCompRemask[3:0] for 0th scale (1511) | | | | modCompRemask[11:8] for 1st scale (1512) | | | | 0/1 | |
| modCompRemask[7:0] for 1st scale (1512) | | | | | | | | 0/1 | |
| modCompParam (not always present) (1513) | | | | | | | | 0/2* | |
| modCompParam (not always present) (1514) | | | | | | | | 0/2* | |
| udCompParam (not always present) | | | | | | | | 0/1/2 | Octet 17/19/21 |
| iSample (1st RE in the PRB) | | | | | | | | 1* | K=17/19/20/21/23 |
| qSample (1st RE in the PRB) | | | | | | | | 1* | K+1* |
| ... | | | | | | | | | |

1510

FIG. 15

1600

| Section Type 1,3,5 : DL/UL IQ data msgs | | | | | | | | | | |
|---|---|---|---|---|---|---|---|---|---|---|
| 0 (msb) | 1 | 2 | 3 | 4 | 5 | 6 | 7 (lsb) | # of bytes | | |
| transportheader, see clause 5.1.3 | | | | | | | | 8 | Octet 1 | |
| dataDirection | payloadVersion | | | filterIndex | | | | 1 | Octet 9 | |
| frameId | | | | | | | | 1 | Octet 10 | |
| subrameId | | | | slotId | | | | 1 | Octet 11 | |
| slotId | | symbolid | | | | | | 1 | Octet 12 | |
| sectionId | | | | | | | | 1 | Octet 13 | |
| sectionId | | | | rb | symInc | startPrbu | | 1 | Octet 14 | |
| startPrbu | | | | | | | | 1 | Octet 15 | |
| numPrbu | | | | | | | | 1 | Octet 16 | |
| udCompHdr (not always present) | | | | | | | | 0/1 | Octet 17 | |
| reserved (not always present) | | | | | | | | 0/1 | Octet 18 | |
| udCompLen (not always present) | | | | | | | | 0/2 | Octet 17/19 | |
| modCompRemask[11:4] for 0th scale (1611) | | | | | | | | 0/1 | | 1610 |
| modCompRemask[3:0] for 0th scale (1611) | | | | modCompRemask[11:8] for 1st scale (1612) | | | | 0/1 | | |
| modCompRemask[7:0] for 1st scale (1612) | | | | | | | | 0/1 | | |
| modCompParam (not always present) (1613) | | | | | | | | 0/2* | | |
| modCompParam (not always present) (1614) | | | | | | | | 0/2* | | |
| udCompParam (not always present) | | | | | | | | 0/1/2 | Octet 17/19/21 | |
| iSample (1st RE in the PRB) | | | | | | | | 1* | K=17/19/20/21/23 | |
| qSample (1st RE in the PRB) | | | | | | | | 1* | K+1* | |
| ... | | | | | | | | | | |
| iSample (12th RE in the PRB) | | | | | | | | | | |
| qSample (12th RE in the PRB) | | | | | | | | | | |
| udCompParam (not always present) | | | | | | | | | | |
| modCompRemask[11:4] for 0th scale | | | | | | | | 0/1 | | 1620 |
| modCompRemask[3:0] for 0th scale | | | | modCompRemask[11:8] for 1st scale | | | | 0/1 | | |
| modCompRemask[7:0] for 1st scale | | | | | | | | 0/1 | | |
| modCompParam (not always present) | | | | | | | | 0/2* | | |
| modCompParam (not always present) | | | | | | | | 0/2* | | |
| iSample (1st RE in the PRB) | | | | | | | | | | |
| qSample (1st RE in the PRB) | | | | | | | | | | |
| ... | | | | | | | | | | |
| iSample (12th RE in the PRB) | | | | | | | | | | |
| qSample (12th RE in the PRB) | | | | | | | | | | |

FIG. 16

1700

| Section Type 1,3,5 : DL/UL IQ data msgs | | | | | | | | | |
|---|---|---|---|---|---|---|---|---|---|
| 0 (msb) | 1 | 2 | 3 | 4 | 5 | 6 | 7 (lsb) | # of bytes | |
| transportheader, see clause 5.1.3 | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | symbolid | | | | | | 1 | Octet 12 |
| modCompMode=0 (not always present) (1710) | | | | | | | | | |
| sectionId | | | | | | | | 1 | Octet 13 |
| sectionId | | | | rb | symInc | startPrbu | | 1 | Octet 14 |
| startPrbu | | | | | | | | 1 | Octet 15 |
| numPrbu | | | | | | | | 1 | Octet 9 |
| udCompHdr (not always present) | | | | | | | | 0/1 | Octet 17 |
| reserved (not always present) | | | | | | | | 0/1 | Octet 18 |
| udCompLen (not always present) | | | | | | | | 0/2 | Octet 17/19 |
| modCompParam (not always present) (1721) | | | | | | | | 0/2* | |
| udCompParam (not always present) | | | | | | | | 0/1/2 | Octet 17/19/21 |
| iSample (1st RE in the PRB) | | | | | | | | 1* | K=17/19/20/21/23 |
| qSample (1st RE in the PRB) | | | | | | | | 1* | K+1* |
| ... | | | | | | | | | |
| iSample (12th RE in the PRB) | | | | | | | | 1* | K=46/47/48* |
| qSample (12th RE in the PRB) | | | | | | | | 1* | K=47/48/49* |
| ... | | | | | | | | | |
| sectionId | | | | | | | | 1 | Octet M |
| sectionId | | | | rb | symInc | startPrbu | | 1 | M+1 |
| startPrbu | | | | | | | | 1 | M+2 |
| numPrbu | | | | | | | | 1 | M+3 |
| udCompHdr (not always present) | | | | | | | | 0/1 | M+4 |
| reserved (not always present) | | | | | | | | 0/1 | M+5 |
| udCompLen (not always present) | | | | | | | | 0/2 | M+4/6 |
| modCompParam (not always present) (1722) | | | | | | | | 0/2* | |
| udCompParam (not always present) | | | | | | | | 0/1/2 | M+4/6/8 |
| iSample (1st RE in the PRB) | | | | | | | | 1* | K=M+4/6/7/8/10 |
| qSample (1st RE in the PRB) | | | | | | | | 1* | K+1* |
| ... | | | | | | | | | |
| iSample (12th RE in the PRB) | | | | | | | | 1* | K=46/47/48* |
| qSample (12th RE in the PRB) | | | | | | | | 1* | K=47/48/49* |

1701

FIG. 17

1800

| Section Type 1,3,5 : DL/UL IQ data msgs | | | | | | | | | | |
|---|---|---|---|---|---|---|---|---|---|---|
| 0 (msb) | 1 | 2 | 3 | 4 | 5 | 6 | 7 (lsb) | # of bytes | | |
| transportheader, see clause 5.1.3 | | | | | | | | 8 | Octet 1 | |
| dataDirection | payloadVersion | | | filterIndex | | | | 1 | Octet 9 | |
| frameId | | | | | | | | 1 | Octet 10 | |
| subframeId | | | | slotId | | | | 1 | Octet 11 | |
| slotId | | symbolId | | | | | | 1 | Octet 12 | |
| sectionId | | | | | | | | 1 | Octet 13 | |
| sectionId | | | | rb | symInc | startPrbu | | 1 | Octet 14 | |
| startPrbu | | | | | | | | 1 | Octet 15 | |
| numPrbu | | | | | | | | 1 | Octet 9 | |
| udCompHdr (not always present) | | | | | | | | 0/1 | Octet 17 | 1801 |
| reserved (not always present) | | | | | | | | 0/1 | Octet 18 | |
| udCompLen (not always present) | | | | | | | | 0/2 | Octet 17/19 | |
| modCompMode=0 (not always present) (1811) | | | | | | | | | | |
| modCompParam (not always present) (1821) | | | | | | | | 0/2* | | |
| udCompParam (not always present) | | | | | | | | 0/1/2 | Octet 17/19/21 | |
| iSample (1st RE in the PRB) | | | | | | | | 1* | K=17/19/20/21/23 | |
| qSample (1st RE in the PRB) | | | | | | | | 1* | K+1* | 1802 |
| ... | | | | | | | | | | |
| iSample (12th RE in the PRB) | | | | | | | | 1* | K=46/47/48* | |
| qSample (12th RE in the PRB) | | | | | | | | 1* | K=47/48/49* | |
| ... | | | | | | | | | | |
| sectionId | | | | | | | | 1 | Octet M | |
| sectionId | | | | rb | symInc | startPrbu | | 1 | M+1 | |
| startPrbu | | | | | | | | 1 | M+2 | |
| numPrbu | | | | | | | | 1 | M+3 | |
| udCompHdr (not always present) | | | | | | | | 0/1 | M+4 | |
| reserved (not always present) | | | | | | | | 0/1 | M+5 | |
| udCompLen (not always present) | | | | | | | | 0/2 | M+4/6 | |
| modCompMode=1 (not always present) (1812) | | | | | | | | | | |
| udCompParam (not always present) | | | | | | | | 0/1/2 | M+4/6/8 | |
| modCompParam (not always present) (1822) | | | | | | | | 0/2* | | |
| iSample (1st RE in the PRB) | | | | | | | | 1* | K=M+4/6/7/8/10 | |
| qSample (1st RE in the PRB) | | | | | | | | 1* | K+1* | 1803 |
| ... | | | | | | | | | | |
| iSample (12th RE in the PRB) | | | | | | | | 1* | K=46/47/48* | |
| qSample (12th RE in the PRB) | | | | | | | | 1* | K=47/48/49* | |
| udCompParam (not always present) | | | | | | | | 0/1/2 | M+4/6/8 | |
| modCompParam (not always present) (1823) | | | | | | | | 0/2* | | |
| iSample (1st RE in the PRB) | | | | | | | | 1* | K=M+4/6/7/8/10 | |
| qSample (1st RE in the PRB) | | | | | | | | 1* | K+1* | 1804 |
| ... | | | | | | | | | | |
| iSample (12th RE in the PRB) | | | | | | | | 1* | K=46/47/48* | |
| qSample (12th RE in the PRB) | | | | | | | | 1* | K=47/48/49* | |

FIG. 18

1900

| 0 (msb) | 1 | 2 | 3 | 4 | 5 | 6 | 7 (lsb) | # of bytes | |
|---|---|---|---|---|---|---|---|---|---|
| udCompHdr (not always present) | | | | | | | | 0/1 | Octet 17 |
| mcReMaskMode=0 | | reserved | | numMcReMask=1 | | | | 0/1 | Octet 18 |
| udCompLen (not always present) | | | | | | | | 0/2 | Octet 17/19 |
| udCompParam=modCompParam (not always present) | | | | | | | | 0/2* | |
| iSample (1st RE in the PRB) | | | | | | | | 1* | K=17/19/20/21/23 |
| qSample (1st RE in the PRB) | | | | | | | | 1* | K+1* |
| ... | | | | | | | | | |

1910 (rows udCompHdr to udCompLen)

1920 (rows udCompParam to ...)

FIG. 19

2000

| 0 (msb) | 1 | 2 | 3 | 4 | 5 | 6 | 7 (lsb) | # of bytes | |
|---|---|---|---|---|---|---|---|---|---|
| udCompHdr (not always present) | | | | | | | | 0/1 | Octet 17 |
| mcReMaskMode=0 | | reserved | | numMcReMask=2 | | | | 0/1 | Octet 18 |
| modCompRemask[11:4] for 0th scale | | | | | | | | 0/1 | |
| modCompRemask[3:0] for 0th scale | | | | modCompRemask[11:8] for 1st scale | | | | 0/1 | |
| modCompRemask[7:0] for 1st scale | | | | | | | | 0/1 | |
| udCompLen (not always present) | | | | | | | | 0/2 | Octet 17/19 |
| modCompParam (not always present) | | | | | | | | 0/2* | |
| modCompParam (not always present) | | | | | | | | 0/2* | |
| iSample (1st RE in the PRB) | | | | | | | | 1* | K=17/19/20/21/23 |
| qSample (1st RE in the PRB) | | | | | | | | 1* | K+1* |
| ... | | | | | | | | | |

2010

2020

FIG. 20

2100

| 0 (msb) | 1 | 2 | 3 | 4 | 5 | 6 | 7 (lsb) | # of bytes | |
|---|---|---|---|---|---|---|---|---|---|
| udCompHdr (not always present) | | | | | | | | 0/1 | Octet 17 |
| mcReMaskMode=0 | | reserved | | numMcReMask=2 | | | | 0/1 | Octet 18 |
| udCompLen (not always present) | | | | | | | | 0/2 | Octet 17/19 |
| modCompRemask[11:4] for 0th scale | | | | | | | | 0/1 | |
| modCompRemask[3:0] for 0th scale | | | | modCompRemask[11:8] for 1st scale | | | | 0/1 | |
| modCompRemask[7:0] for 1st scale | | | | | | | | 0/1 | |
| modCompParam (not always present) | | | | | | | | 0/2* | |
| modCompParam (not always present) | | | | | | | | 0/2* | |
| iSample (1st RE in the PRB) | | | | | | | | 1* | K=17/19/20/21/23 |
| qSample (1st RE in the PRB) | | | | | | | | 1* | K+1* |
| ... | | | | | | | | | |

2110 (udCompHdr to udCompLen rows)

2120 (modCompRemask[11:4] for 0th scale to last row)

FIG. 21

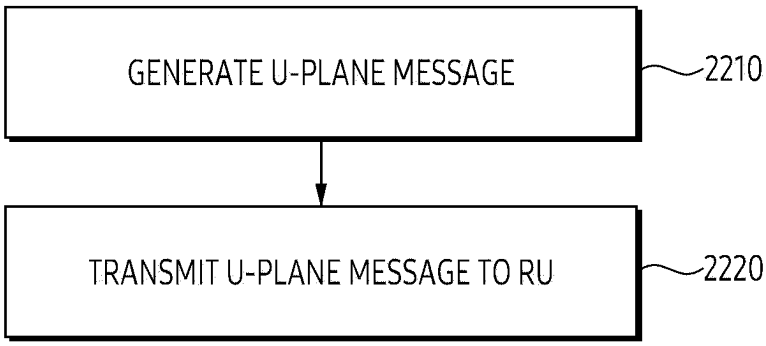
GENERATE U-PLANE MESSAGE
2210
TRANSMIT U-PLANE MESSAGE TO RU
2220

FIG. 22

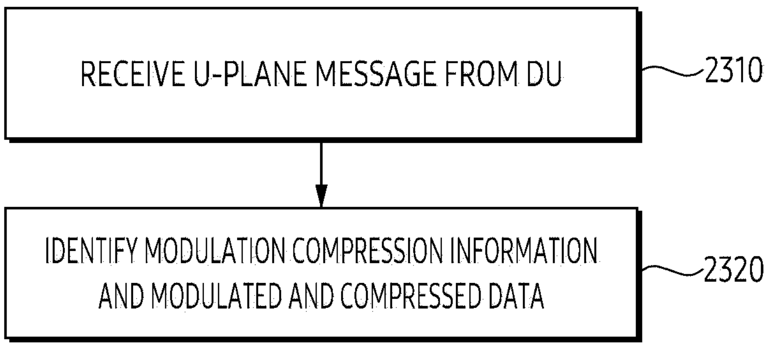
RECEIVE U-PLANE MESSAGE FROM DU
2310
IDENTIFY MODULATION COMPRESSION INFORMATION AND MODULATED AND COMPRESSED DATA
2320

FIG. 23

## INTERNATIONAL SEARCH REPORT

International application No.
**PCT/KR2023/015269**

**A. CLASSIFICATION OF SUBJECT MATTER**

**H04L 69/04**(2022.01)i; **H04W 88/08**(2009.01)i; **H04W 92/02**(2009.01)i; **H04L 27/34**(2006.01)i; **H04W 92/04**(2009.01)i; **H04L 69/22**(2022.01)i

According to International Patent Classification (IPC) or to both national classification and IPC

**B. FIELDS SEARCHED**

Minimum documentation searched (classification system followed by classification symbols)

H04L 69/04(2022.01); H04B 7/06(2006.01); H04L 29/06(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DU(distributed unit), RU(radio unit), 사용자 평면(user plane, U-plane) 메세지(message), 변조 압축 정보(modulation compression information), 섹션(section), 성상도 이동 플래그(constellation shift flag, csf), 스케일 팩터(scale factor)

**C. DOCUMENTS CONSIDERED TO BE RELEVANT**

| Category* | Citation of document, with indication, where appropriate, of the relevant passages | Relevant to claim No. |
|---|---|---|
| X | Publicly Available Specification (PAS); O-RAN Fronthaul Control, User and Synchronization Plane Specification v07.02; (O-RAN-WG4.CUS.0.v07.02). ETSI TS 103 859 V7.0.2. 08 September 2022. See pages 56, 99, 159, 165, 167-168, 171-173, 229 and 250-252; and table 8-4. | 1-15 |
| A | LAGEN, Sandra et al. Modulation Compression in Next Generation RAN: Air Interface and Fronthaul Trade-offs. arXiv:2011.03734v1 [cs.NI]. 07 November 2020. See pages 4-5. | 1-15 |
| A | 이재승 등. 개방형 5G 프론트홀 기술 동향. 전자통신동향분석. vol. 37, no. 3, pp. 1-10, 02 June 2022 (LEE, J. S. et al. Technological Trends in Open 5G Fronthaul. Electronics and Telecommunications Trends.) See pages 7-9. | 1-15 |
| A | WO 2022-005709 A1 (QUALCOMM INCORPORATED) 06 January 2022 (2022-01-06) See paragraphs [0071]-[0095]. | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 January 2024** | **24 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2023/015269**

**C. DOCUMENTS CONSIDERED TO BE RELEVANT**

| Category* | Citation of document, with indication, where appropriate, of the relevant passages | Relevant to claim No. |
|---|---|---|
| A | US 2021-0273704 A1 (MAVENIR NETWORKS, INC.) 02 September 2021 (2021-09-02) See paragraphs [0126]-[0262]. | 1-15 |

Form PCT/ISA/210 (second sheet) (July 2022)

**INTERNATIONAL SEARCH REPORT**
**Information on patent family members**

International application No.
**PCT/KR2023/015269**

| Patent document cited in search report | Publication date (day/month/year) | Patent family member(s) | Publication date (day/month/year) |
|---|---|---|---|
| WO 2022-005709 A1 | 06 January 2022 | CN 115735379 A | 03 March 2023 |
| | | EP 4173359 A1 | 03 May 2023 |
| | | KR 10-2023-0029664 A | 03 March 2023 |
| | | US 2023-0180055 A1 | 08 June 2023 |
| US 2021-0273704 A1 | 02 September 2021 | EP 3836420 A1 | 16 June 2021 |
| | | US 11043998 B2 | 22 June 2021 |
| | | US 11323166 B2 | 03 May 2022 |
| | | US 2021-0135722 A1 | 06 May 2021 |

Form PCT/ISA/210 (patent family annex) (July 2022)